# EUROPEAN PATENT APPLICATION

(11) **EP 2 190 238 A1**
(43) Date of publication of application: **26.05.2010**
(21) Application number: 08792349.6
(22) Date of filing: 08.08.2008
(51) Int. Cl.: H04W 24/00

(54) **USER DEVICE, BASE STATION DEVICE AND TRANSMISSION CONTROL METHOD**

(30) Priority: 14.08.2007 JP 2007211588
(71) Applicant: NTT DoCoMo, Inc., Chiyoda-ku Tokyo 100-6150 (JP)
(72) Inventor: ISHII, Hiroyuki, Tokyo 100-6150 (JP)
(74) Representative: HOFFMANN EITLE
(86) International application number: PCT/JP2008/064365
(87) International publication number: WO 2009/022668

(57) **Abstract**

The present invention is realized by a user apparatus in communication with a base station apparatus, the user apparatus is provided with a determining unit which determines a downlink synchronization status based on downlink quality information measured based on a downlink signal transmitted from the base station apparatus.

## Description

### BACKGROUND OF THE INVENTION

### 1. Field of the Invention

The present invention generally relates to mobile communications systems and particularly relates to user apparatuses, base station apparatuses, and transmission control methods.

### 2. Description of the Related Art

As a communications scheme to succeed W-CDMA (Wideband Code Division Multiple Access) and HSDPA, Long Term Evolution (LTE) is being studied in a W-CDMA standardization body called 3GPP. Moreover, as radio access schemes, OFDMA (Orthogonal Frequency Division Multiple Access) is being considered for downlink, while SC-FDMA (Single-Carrier Frequency Division Multiple Access) is being considered for uplink (see Non-patent document 1, for example).

The OFDMA, which is a scheme for dividing a frequency band into multiple narrow frequency bands (sub-carriers) and overlaying data onto the respective frequency bands to transmit the data, densely arranges the sub-carriers on the frequency axis such that one sub-carrier partially overlaps another sub-carrier without their interfering with each other, making it possible to achieve high-speed transmission and to improve frequency utilization efficiency.

The SC-FDMA is a transmission scheme which divides a frequency bandwidth and transmits using different frequency bands among multiple terminals to make it possible to reduce interference between the terminals. The SC-FDMA, which features a reduced variation in transmission power, makes it possible to achieve wide coverage as well as low power consumption of the terminals.

In the W-CDMA, the following two indicators are being defined to determine a downlink synchronization status (see Non-patent document 2, for example):
- Dedicated physical control channel (DPCCH) quality; and
- cyclic redundancy check (CRC) results

Here, the DPCCH quality corresponds to a receive quality (e.g., an SIR (signal-to-power ratio) or a receive level) of a transmission power control (TPC) bit and pilot symbols, while the CRC check results correspond to a block error rate.

In the W-CDMA, which is a mobile communications scheme using a communications channel (a dedicated channel) set up on a one-on-one basis between a base station apparatus and a mobile station, the DPCCH is basically transmitted every slot. Thus, the determining of synchronization is made possible using the DPCCH, which is transmitted every slot.

Moreover, the DPCCH includes the TPC bit for controlling uplink transmission power. Thus, a problem occurs that the uplink transmission power is not properly controlled when an error occurs in the TPC bit. For example, the uplink transmission power becoming larger than necessary due to the TPC bit error causes a signal interfering with an uplink signal transmitted from other mobile stations. Thus, the downlink synchronization status is determined according to the receive quality of the TPC bit or a dedicated pilot symbol which is a signal equivalent to the TPC bit (Non-patent document 3).
Non-patent document 1: 3GPP TR 25.814 (V7.0.0), "Physical Layer Aspects for Evolved UTRA," June 2006
Non-patent document 2: 3GPP TS 25.214 (V7.2.0) "4.3.1.3 Uplink Synchronization primitives", Sept. 2006
Non-patent document 3: 3GPP TS 25.101 (V7.5.0) "6.4.4 Out of synchronization handling of output power" Sept. 2006
Non-patent document 4: R1-073209 "Way Forward on Uplink Power Control of PUCCH", June 2007
Non-patent document 5: 3GPP TS25.214, V6.10.0 (2006-09)
Non-patent document 6: 3GPP TS36.214, v .0.0. 2007-05

### SUMMARY OF THE INVENTION

### [Problems to be solved by the Invention]

However, the related art as described above has the following problems.

In the LTE system, which is a communications system using a shared channel for both uplink and downlink, there exists no dedicated channel which is set on a one on one basis between a base station apparatus and a mobile station as in the W-CDMA. Thus, determining out-of-synchronization using the DPCCH as described above cannot be performed.

On the other hand, in the LTE system, it is being considered for the mobile station to calculate an uplink transmit power based on a path loss (see non-patent document 4). In general, the path loss is calculated using a receive power of a downlink reference signal and a transmit power of the downlink reference signal. In other words, when the receive quality of the downlink reference signal degrades, it becomes difficult to accurately measure the path loss. As a result, a problem occurs that the uplink transmit power cannot be set accurately.

Moreover, in the W-CDMA, the transmit power of the DPCCH can be controlled to control an area in which a downlink out-of-synchronization occurs. For example, decreasing a maximum value of the DPCCH transmission power makes it possible to decrease an area in which a downlink synchronization status is established.

In light of the problem as described above, one object of the present invention is to provide a user apparatus and a communications control method that make it possible to determine the downlink synchronization status.

Another object of the present invention is to provide a user apparatus and a communications control method that make it possible to stop uplink transmission based on the determined result of the downlink synchronization status.

A further object of the present invention is to provide a base station which makes it possible to specify, from the base station to a mobile station, a threshold for determining the downlink synchronization status.

### [Means for solving the problems]

In order to solve the problems, a user apparatus of the present invention is provided,
the user apparatus in communication with a base station apparatus, the user apparatus including:
a determining unit which determines a downlink synchronization status based on downlink quality information measured based on a downlink signal transmitted from the base station apparatus.

Another user apparatus of the present invention is provided,
the another user apparatus in a mobile communications system, the mobile communications system including a user apparatus and a base station apparatus in communication with the user apparatus, said another user apparatus including:
a receive unit which receives a threshold for determining a downlink synchronization status, the threshold to be transmitted from the base station apparatus; and
a determining unit which determines the downlink synchronization status based on the threshold.

A base station apparatus of the present invention is provided,
the base station apparatus in a mobile communications system, the mobile communications system including a user apparatus and the base station apparatus in communication with the user apparatus,
the base station apparatus including:
a reporting unit which reports a threshold for determining a downlink synchronization status.

A method of controlling transmission of the present invention is provided, the method being a method of controlling transmission in a user apparatus in communication with a base station apparatus, the method including:
a first step of determining a downlink synchronization status based on downlink quality information measured based on a downlink signal transmitted by the base station apparatus; and
a second step of stopping transmission of an uplink signal when the downlink synchronization status is a status in which a synchronization is not established.

### [Advantage of the Invention]

An embodiment of the present invention makes it possible to realize a user apparatus and communications control method that makes it possible to determine a downlink synchronization status.

Another object of the present invention makes it possible to realize a user apparatus and a communications control method that make it possible to stop uplink transmission based on the determined result of the downlink synchronization status.

A further object of the present invention makes it possible to realize a base station which makes it possible to specify, from the base station to a mobile station, a threshold for determining the downlink synchronization status.

### BRIEF DESCRIPTION OF THE DRAWINGS

FIG. 1 is a block diagram illustrating a configuration of a radio communications system according to an embodiment of the present invention;
FIG. 2 is an explanatory diagram illustrating an example of mapping of an uplink control channel;
FIG. 3 is a block diagram illustrating a base station apparatus according to an embodiment of the present invention;
FIG. 4 is a partial block diagram illustrating a base band signal processor of a base station apparatus according to an embodiment of the present invention;
FIG. 5 is a block diagram illustrating a user apparatus according to an embodiment of the present invention;
FIG. 6 is a partial block diagram illustrating a base band signal processor of a user apparatus according to an embodiment of the present invention;
FIG. 7 is an explanatory diagram illustrating an example of CQI calculation;
FIG. 8 is an explanatory diagram illustrating an example of CQI calculation;
FIG. 9 is a flow diagram illustrating a transmission control method according to an embodiment of the present invention;
FIG. 10 is a flow diagram illustrating a transmission control method according to an embodiment of the present invention;
FIG. 11 is a flow diagram illustrating a transmission control method according to an embodiment of the present invention;
FIG. 12 is a partial block diagram illustrating a base band signal processor of a user apparatus according to an embodiment of the present invention;
FIG. 13A is a flow diagram illustrating a transmission control method according to an embodiment of the present invention;
FIG. 13B is a flow diagram illustrating a transmission control method according to an embodiment of the present invention;
FIG. 14 is a partial block diagram illustrating a base band signal processor of a user apparatus according to an embodiment of the present invention;
FIG. 15A is a flow diagram illustrating a transmission control method according to an embodiment of the present invention;
FIG. 15B is a flow diagram illustrating a transmission control method according to an embodiment of the present invention;
FIG. 16 is a partial block diagram illustrating a base band signal processor of a user apparatus according to an embodiment of the present invention;
FIG. 17A is a flow diagram illustrating a transmission control method according to an embodiment of the present invention; and
FIG. 17B is a flow diagram illustrating a transmission control method according to an embodiment of the present invention.

### DESCRIPTION OF THE PREFERRED EMBODIMENTS

### [Description of Notations]

50 cell; 100ₙ(100₁, 100₂, 100₃, ..., 100ₙ) user apparatus; 102 transmit/receive antenna; 104 amplifier; 106 transmitter/receiver; 108 base band signal processor; 1080 A/D converter; 1081 CP removing unit; 1082 fast Fourier transformer (FFT); 1083 demultiplexer (DeMUX); 1084 data signal decoder; 1085 downlink reference signal receiver; 1086 CQI calculating unit; 1087 synchronization status determining unit; 1088 MAC processor; 1089 RLC processor; 1090 signal generator; 1091 transmit processor; 1092 RSRP calculating unit; 1094 SIR calculating unit; 110 call processor; 112 application unit; 200 base station apparatus; 202 transmit/receive antenna; 204 amplifier; 206 transmitter/receiver; 208 base band signal processor; 2081 layer 1 processor; 20811 receive processor; 20812 transmit processor; 20813 uplink decode processor; 20814 downlink modulation processor; 20815 downlink reference signal generator; 2082 MAC processor; 2083 RLC processor; 210 call processor; 212 transmission line interface; 300 access gateway apparatus; 400 core network; 500 physical uplink shared channel; 510 uplink control channel; 520 uplink control channel

### [Best Mode of Carrying Out the Invention]

In the following, best modes for carrying out the invention are described based on the following embodiments with reference to the drawings.

Throughout the drawings for explaining the embodiments, same letters are used for those elements having the same functions, so that repetitive explanations are omitted.

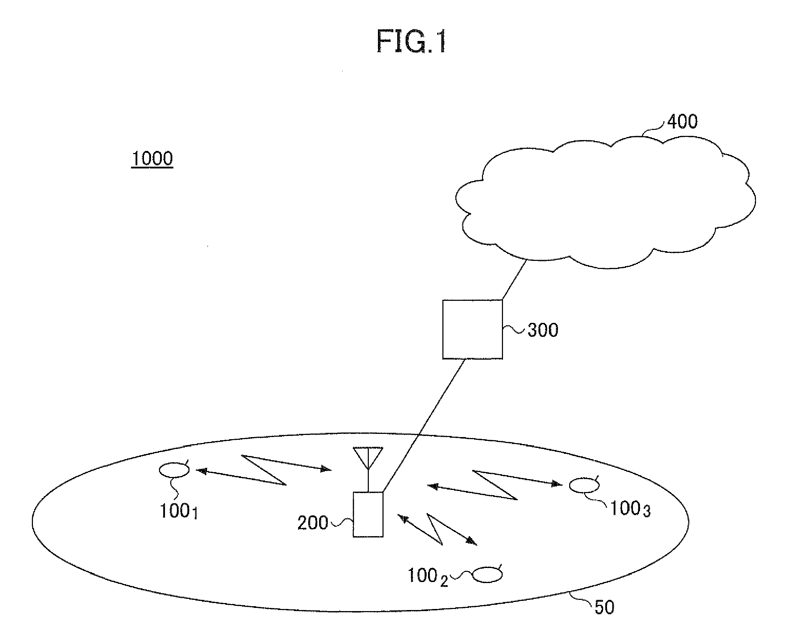

With reference to FIG.1, an explanation is given for a radio communications system to which a user apparatus and a base station apparatus according to an embodiment of the present invention is applied.

A radio communications system 100₀ is a system to which Evolved UTRA and UTRAN (also called Long Term Evolution or Super 3G) is applied, for example. The radio communications system 100₀ includes a base station apparatus (eNB: eNodeB) 200 and multiple user apparatuses (UE: user equipment) units 100ₙ (100₁, 100₂, 100₃, ..., 100ₙ, where n is an integer greater than 0). The base station apparatus 200 is connected to an upper-layer station (e.g., an access gateway apparatus 300). The access gateway apparatus 300 is connected to a core network 400. Here, the user apparatus 100ₙ communicates with the base station apparatus 200 in a cell 50 using the Evolved UTRA and UTRAN.

Below, the user apparatuses 100ₙ (100₁, 100₂, 100₃, .., 100ₙ) have the same configuration, function, and status. Thus, unless otherwise indicated, they will be explained below as the user apparatus 100ₙ. For convenience of explanations, what wirelessly communicates with the base station apparatus is a mobile station apparatus, but more generally may be a user equipment (UE) unit which includes a mobile terminal or a fixed terminal.

For the radio communications system 1000, OFDMA (Orthogonal Frequency Division Multiple Access) is applied for downlink and SC-FDMA (Single Carrier-Frequency Division Multiple Access) is applied for uplink as radio access schemes. As described above, the OFDMA is a scheme for dividing a frequency band into multiple narrow frequency bands (sub-carriers) and overlaying data onto the respective frequency bands to transmit the data. The SC-FDMA is a transmission scheme which divides a frequency bandwidth and transmits using different frequency bands among multiple terminals to make it possible to reduce interference between the terminals.

Here, communication channels in the Evolved UTRA and UTRAN are described.

In downlink, a physical downlink shared channel (PDSCH), which is shared for use by each user apparatus 100ₙ, and a physical downlink control channel (PDCCH), which is a downlink control, channel are used. In other words, the downlink channel refers to the physical downlink shared channel and the physical downlink control channel. In downlink, transport format information and user information mapped to the physical downlink shared channel-, transport format information and user information mapped to the physical uplink shared channel, and acknowledgement information on the physical uplink shared channel, etc., are reported using the physical downlink control channel, while user data are transmitted using the physical downlink shared channel.

A transport channel to be mapped to the physical downlink shared channel is a downlink shared channel (DL-SCH). In other words, packet data are mapped to DL-SCH. Moreover, as logical channels, a DTCH, which is a U-plane signal, a DCCH, which is a C-plane signal, and a BCCH, etc., which is broadcast information, are mapped to the DL-SCH.

Furthermore, the transport format information and the user information that are mapped to the physical downlink shared channel as described above are called downlink scheduling information. The downlink scheduling information may be called downlink assignment information or a downlink scheduling grant. Moreover, the transport format information and the user information that are mapped to the physical uplink shared channel are called uplink scheduling grant. The downlink scheduling information and the uplink scheduling grant may collectively be called downlink control information.

Moreover, in downlink, a downlink reference signal (DL RS) is transmitted as a pilot signal. The downlink reference signal is used, for example, by a user apparatus in downlink channel estimation or radio quality measurement.

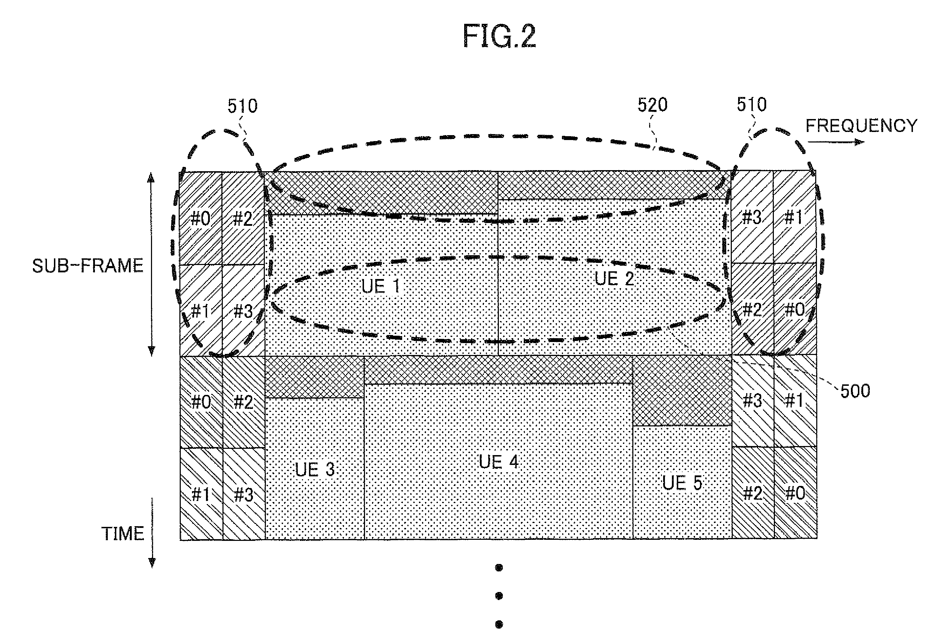

For uplink, a PUSCH (Physical Uplink Shared Channel) which is shared for use by each user apparatus 100ₙ and an uplink control channel for the LTE are used. In other words, the uplink channel refers to the physical uplink shared channel and the uplink control channel for the LTE. There are two types of uplink control channels for the LTE, a channel which is time multiplexed with the physical uplink shared channel and a channel which is frequency multiplexed with the physical uplink shared channel. FIG. 2 shows a mapping of the uplink control channel for the LTE. In FIG. 2, for the frequency-multiplexed uplink control channels, locations are mapped to differ between two slots within a sub-frame (a frequency hopping is performed.). In FIG. 2, 500 shows a physical uplink shared channel, 510 shows a case of frequency multiplexing with the physical uplink shared channel, and 520 shows a case of time multiplexing with the physical uplink shared channel. In FIG. 2, while the time-multiplexed uplink control channel is mapped to the beginning of a sub-frame, it may be mapped to the middle of the sub-frame. Moreover, the time-multiplexed uplink control channel may be transmitted as a part of the physical uplink shared channel.

In uplink, downlink CQI (Channel Quality Indicator) information for use in downlink shared channel scheduling, and AMCS (Adaptive Modulation and Coding Scheme), and downlink physical downlink shared channel acknowledgement (HARQ ACK) information are transmitted using the uplink control channel for the LTE. Moreover, packet data are transmitted using the physical uplink shared channel.

A transport channel to be mapped to the physical uplink shared channel is an uplink shared channel (UL-SCH). In other words, user data are mapped to the UL-SCH.

The above-described user data, which include an IP packet using Web browsing, FTP, VoIP, etc., and a control signal for radio resource control (RRC) processing, are also called packet data. Moreover, the user data may be called, as a transport channel, the DL-SCH or the UL-SCH, for example, and as a logical channel, a dedicated traffic channel (DTCH) or a dedicated control channel (DCCH).

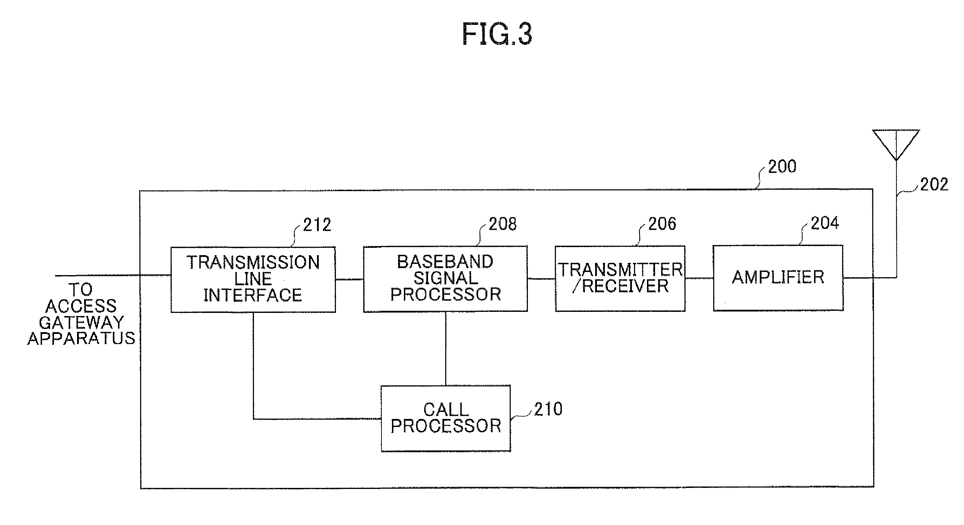

A base station apparatus 200 according to the embodiment of the present invention is explained with reference to FIG. 3.

The base station apparatus 200 includes a transmit/receive antenna 202, an amplifier 204, a transmitter/receiver 206, a base band signal processor 208, a call processor 210, and a transmission line interface 212.

Packet data transmitted from the base station apparatus 200 to the mobile station 100ₙ in downlink is input from an upper-layer station which is located at a layer upper to the base station 200 (for example, an access gateway apparatus 300) via a transmission line interface 212 to a base band signal processor 208.

The base band signal processor 208 performs RLC (radio link control) layer transmit process such as RLC retransmission control transmit process, segmentation/concatenation of the packet data, PDCP layer transmit process, MAC retransmission control, for example, HARQ (Hybrid automatic repeat request), transmit process, scheduling, transmission format selection, channel encoding, inverse fast Fourier transform (IFFT) process before it is transferred to the transmitter/receiver 206. Moreover, in addition to the packet data, broadcast information transmitted from the base station apparatus 200 to the user apparatus 100ₙ using a broadcast channel also undergoes a similar transmission process, after which it is transferred to the transmitter/receiver 206.

The transmitter/receiver 206 performs a frequency conversion process in which a base band signal output from the base band signal processor 208 is converted to a radio frequency band. Then, the signal is amplified at the amplifier 204, which amplified signal is transmitted from the transmit/receive antenna 202.

On the other hand, for packet data transmitted from the user apparatus 100ₙ to the base station apparatus 200 in uplink, a radio frequency signal received at the transmit/receive antenna 202 is amplified at the amplifier 204, which amplified signal is frequency converted at the transmitter/receiver 206 to a base band signal, which is input to the base band signal processor 208.

The base band signal processor 208 performs FFT, error correction decoding, MAC retransmission control receive process, RLC layer receive process, and PDCP layer receive process on the input base band signal, which processed signal is transferred to the access gateway apparatus 300 via the transmission line interface 212.

Here, the packet data refer to, for example, voice signal in VoIP, or signals transmitted to each of the applications, such as FTP, streaming, Web browsing, etc.

The call processor 210 performs control of a status of communications status between the user apparatus 100ₙ and the base station apparatus 200, as well as status control and resource allocation of the base station apparatus 200.

Moreover, the call processor 210 may hold a threshold for determining a downlink synchronization status in the user apparatus 100ₙ and uses a broadcast channel or a radio resource control message (an RRC message) to report the threshold to the user apparatus 100ₙ. More specifically, although described in the hollowing, a time interval T4 and thresholds TH1, TH2, TH3, and TH5 that are used at the time the user apparatus 100ₙ determines the downlink synchronization status based on the CQI value are reported to the user apparatus using the broadcast channel or the RRC message. The broadcast channel and the RRC message are transmitted from the call processor 210 to the user apparatus 100ₙ via the base band signal processor 208, the transmitter/receiver 206, the amplifier 204, and the transmit/receive antenna 202. Reporting the thresholds TH1, TH2, TH3, and TH5, and the time interval T4 using the broadcast channel makes it possible to determine the downlink, synchronization status using a common decision criteria within the cell 50.

On the other hand, when the thresholds TH1, TH2, TH3, and TH5 and the time interval T4 are reported using the RRC message, the RRC message is reported to each user apparatus individually, so that the downlink synchronization status can be determined using decision criteria suited to each user apparatus.

The above-described thresholds TH1, TH2, TH3 and TH4, and the time interval T4 may be thresholds used at the time the user apparatus 100ₙ determines the downlink synchronization status based on the CQI value in an RRC connected status, or may be thresholds used at the time the user apparatus 100ₙ determines the synchronization status of downlink using the CQI value in an idle status. Alternatively, the above-described thresholds TH1, TH2, TH3, and TH5 may be thresholds used at the time the user apparatus 100ₙ determines the downlink synchronization status based on the CQI value in both the RRC connected status and the idle status. Alternatively, the above-described thresholds TH1, TH2, TH3, and TH5 may be values separately defined for a case of their being in the RRC connected status and for a case of their being in the idle status.

Alternatively, the above-described thresholds TH1, TH2, TH3 and TH5, and the time interval T4 may be thresholds used at the time the user apparatus 100ₙ in the RRC connected status and in a DRX connected status determines the downlink synchronization status based on the CQI value, or may be thresholds used at the time the user apparatus 100ₙ in the RRC connected status and in an Non-DRX status determines the downlink synchronization status using the CQI value. Alternatively, the above-described thresholds TH1, TH2, TH3, and TH5 may be thresholds used at the time the user apparatus 100ₙ is in the RRC connected status and the DRX status, and at the time the user apparatus 100ₙ is in the RRC connected status and the non- DRX status determines the downlink synchronization status based on the CQI value. Alternatively, the above-described thresholds TH1, TH2, TH3, and TH5 may be values separately defined for a case of the user apparatus 100ₙ being in the RRC connected status and the Non-DRX and for a case of the user apparatus 100ₙ being in the RRC connected status and the DRX status.

Alternatively, the above-described thresholds TH1, TH2, TH3 and TH5, and the time interval T4 may be thresholds used at the time the user apparatus 100ₙ in the RRC connected status and in a status in which uplink dedicated resources are released determines the downlink synchronization status based on the CQI value, or may be thresholds used at the time the user apparatus 100ₙ in the RRC connected status and a status in which uplink dedicated resources are not released determines the downlink synchronization status using the CQI value. Alternatively, the above-described thresholds TH1, TH2, TH3, and TH5 may be thresholds used at the time the user apparatus 100ₙ in the RRC connected status and a status in which the uplink dedicated resource are released determines the downlink synchronization status using the CQI value, and at the time the user apparatus 100ₙ in the RRC connected status and the uplink dedicated resource is not released determines the downlink synchronization status using the CQI value. Alternatively, the above-described thresholds TH1, TH2, TH3, and TH5 may be values separately defined for a case of the user apparatus 100ₙ being in the RRC connected status and a status in which the uplink dedicated resource is released and for a case of the user apparatus 100ₙ being in the RRC connected status and the uplink dedicated resource is not released. The uplink dedicated resource may be, for example, a sounding reference signal allocated to the user apparatus or all PUCCH resources. Moreover, the status in which the uplink dedicated resource is released may refer to a status in which an uplink time alignment, or a timing synchronization, is not maintained.

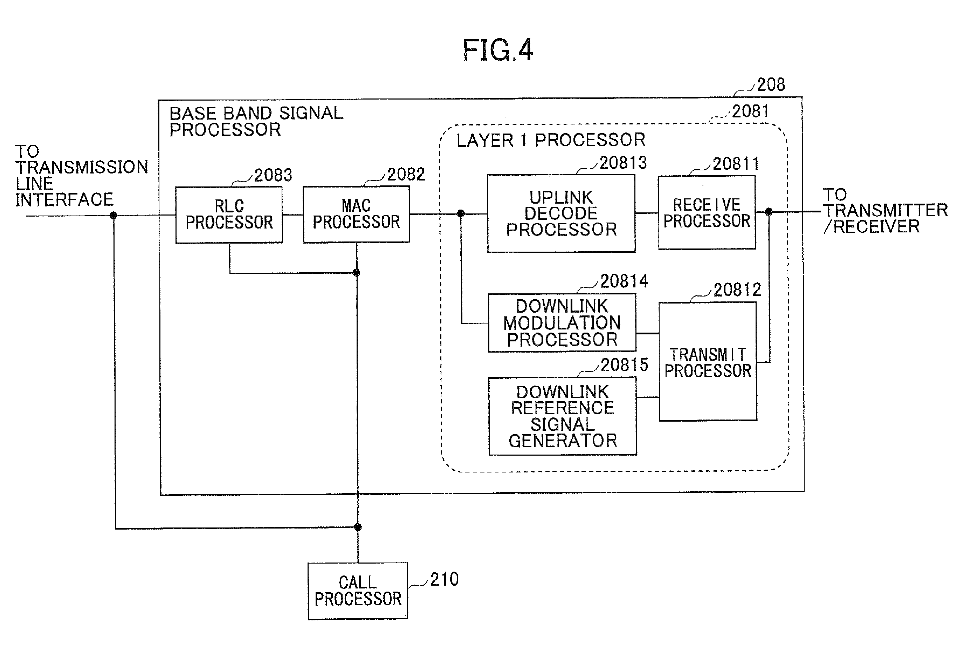

Next, a configuration of the base band signal processor 208 is described with reference to FIG. 4.

The base band signal processor 208 includes a layer 1 processor 2081, a MAC (medium access control) processor 2082, and an RLC processor 2083. Moreover, the layer 1 processor 2081 includes a receive processor 20811, a transmit processor 20812, an uplink decode processor 20813, a downlink signal generator 20814, and a downlink reference signal generator 20815.

In the layer 1 processor 2081, data transmitted downlink undergo channel encoding, IFFT, and data transmitted uplink undergo channel decoding and IDFT, FFT, etc.

More specifically, a signal transmitted downlink, for example, a downlink shared channel (DL-SCH), DL scheduling information, a UL scheduling grant, acknowledgement information on a UL-SCH, a broadcast channel (BCH), a paging channel (PCH), etc., undergo encoding (turbo coding, convolution coding, etc.) and interleaving, the result of which is input into the transmit processor 20812. Moreover, a downlink reference signal is generated in the downlink reference signal processor 20815, the result of which is input to the transmit processor 20812. The transmit processor 20812 multiplexes, with the downlink reference signal, a signal such as the downlink shared channel DL-SCH and the DL-scheduling information, the UL scheduling grant, the acknowledgement information on the UL-SCH, the broadcast channel, the paging channel, etc.

On the other hand, a signal to be received uplink, e.g., CQI and ACK information, a UL-SCH, a demodulation reference signal (DM RS), a sounding reference signal (sounding RS), etc., which is input at the transmitter/receiver 206 as a base band signal, undergoes CP removal, FFT, frequency equalization, inverse discrete Fourier transform (IDFT), etc., after which the result undergoes decoding such as convolution decoding or turbo decoding in the uplink decode processor 20813. Then, the decoded signal such as a CQI, ACK information, UL-SCH, etc. is transferred to the MAC processor 2082. Then, at the uplink decode processor 20813, an SIR is calculated for the sounding reference signal, which result is reported to the MAC processor 2082.

In the layer 1 processor 2081, a demodulation process such as a release request or a scheduling request may be performed besides the demodulation process for the signals as described above.

The MAC processor 2082 receives from the layer 1 processor 2081, a CQI, and ACK information reported from the user apparatus 100ₙ, a decoded result of UL-SCH, an SIR of a sounding reference signal transmitted uplink by the user apparatus 100ₙ.

The MAC processor 2082 performs, on downlink packet data, MAC retransmission control, e.g., HARQ transmission process, scheduling, transmission format selection, frequency resource allocation, etc. Here, the scheduling represents a process of selecting a user apparatus which receives packet data using a shared channel in downlink at the sub-frame. Moreover, the transmission format selection refers to a process of determining a modulation scheme, an encoding rate, and a data size for packet data received by the user apparatus selected in the scheduling. The modulation scheme, the encoding rate and the data size are determined based on a value of a CQI reported uplink from the user apparatus.

Moreover, the frequency resource allocation refers to a process of determining a resource block used for packet data received by the user apparatus selected in the scheduling. The resource block is determined based, for example, on the CQI reported uplink from the user apparatus. The CQI reported from the user apparatus is reported from the layer 1 processor 2081. Then, the MAC processor 2082 reports, to a layer 1 processor 2081, an ID of a user (a user apparatus) communicating using a physical downlink shared channel that is determined using the above-described scheduling, transport format selection, and frequency resource allocation, and information on a transport format of the packet data, i.e., downlink scheduling information. Moreover, the MAC processor 2082 transmits, to the layer 1 processor 2081, packet data to be transmitted to the base station.

Furthermore, the MAC processor 2082 performs, on uplink packet data, a MAC retransmission control receive process, scheduling, transmission format selection, frequency resource allocation, etc. Here, the scheduling means a process of selecting a user apparatus which transmits packet data using a shared channel in a predetermined sub-frame. Moreover, the transmission format selection refers to a process of determining a modulation scheme, an encoding rate, and a data size for packet data transmitted by the user apparatus selected in the scheduling. The modulation scheme, the encoding rate and the data size are determined based on, for example, an SIR of a sounding reference signal transmitted in uplink from a user apparatus, and a path loss between the user apparatus and the base station apparatus. Moreover, the frequency resource allocation refers to a process of determining a resource block used for transmitting packet data transmitted by the user apparatus selected in scheduling. The resource block is determined based, for example, on an SIR of a sounding reference signal transmitted uplink from the user apparatus. Then, the MAC processor 2082 reports, to the layer 1 processor 2081, an ID of a user (user apparatus) communicating using a physical uplink shared channel and information on a transport format of the user data, i.e., a UL scheduling grant, determined using the above-described scheduling, transport format selection, and frequency resource allocation. Moreover, the MAC processor 2082, based on the demodulated results of the uplink shared channel, generates acknowledgement information, and reports the acknowledgement information on the uplink shared channel to the layer 1 processor 2081.

The RLC processor 2083 performs, on downlink packet data, an RLC layer transmit process such as a segmentation/concatenation, an RLC retransmission control transmit process, etc., and an RLC layer receive process such as a segmentation/concatenation, an RLC retransmission control receive process, etc. In the RLC transmit processor 2083, the PDCP layer process as well as the RLC transmission processes may be performed.

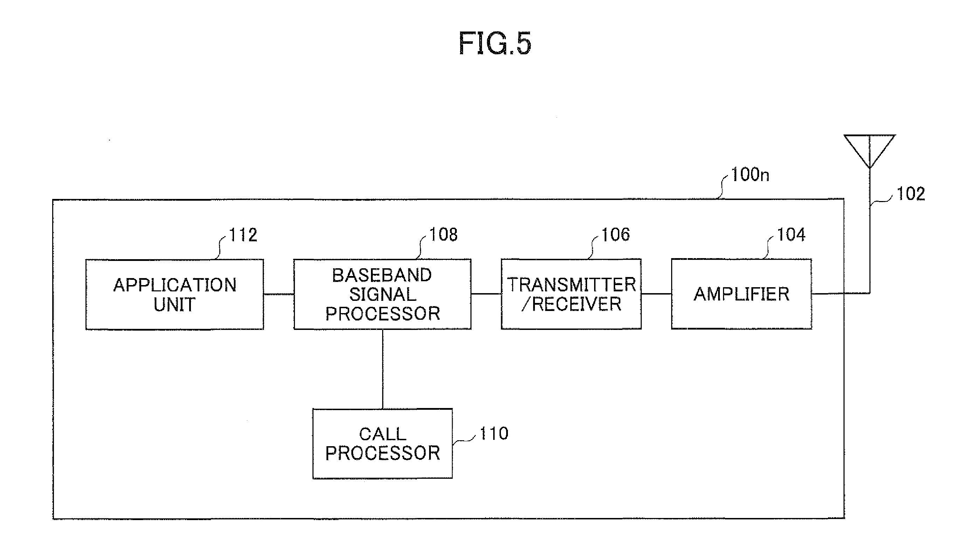

Now, a user apparatus 100ₙ according to the present embodiment is described with reference to FIG. 5. The user apparatus 100ₙ includes an antenna 102, an amplifier 104, a transmitter/receiver 106, a base band signal processor 108, a call processor 110, and an application unit 112.

A downlink signal transmitted by the base station apparatus 200 is received at the antenna 102, a radio frequency signal received at the antenna 102 is amplified at the amplifier 104, frequency converted at the transmitter/receiver 106 so as to be converted to a base band signal. The base band signal as described above undergoes an FFT process, and a receive process such as error correction decoding at the base band signal processor 108.

Moreover, as described below, at the base band signal processor 108, downlink quality information (a downlink quality indicator (CQI)) is generated using a downlink reference signal. Then, a process of determining a downlink synchronization status is performed based on the downlink quality information.

On the other hand, the uplink packet data are entered into the base band signal processor 108 from the application unit 112. At the base band signal processor 108, they undergo a PDCP layer process, packet data segmentation and concatenation, an RLC layer transmit process such as an RLC (radio link control) retransmission control transmit process, a MAC layer transmit process such as a retransmission control (H-ARQ (hybrid ARQ)) transmit process, etc., channel encoding, DFT process, an IFFT process, etc. The transmitter/receiver 106 performs a frequency conversion process in which a base band signal output from the base band signal processor 108 is converted to a radio frequency band. Then, the signal is amplified at the amplifier 104, which amplified signal is transmitted from the transmit/receive antenna 102.

The above-described user data includes, for example, an IP packet using Web browsing, FTP, VoIP, etc. , and a control signal for the radio resource control (RRC) process. Moreover, user data is called, as a logical channel, a dedicated traffic channel (DTCH) or a dedicated control channel (DCCH), for example.

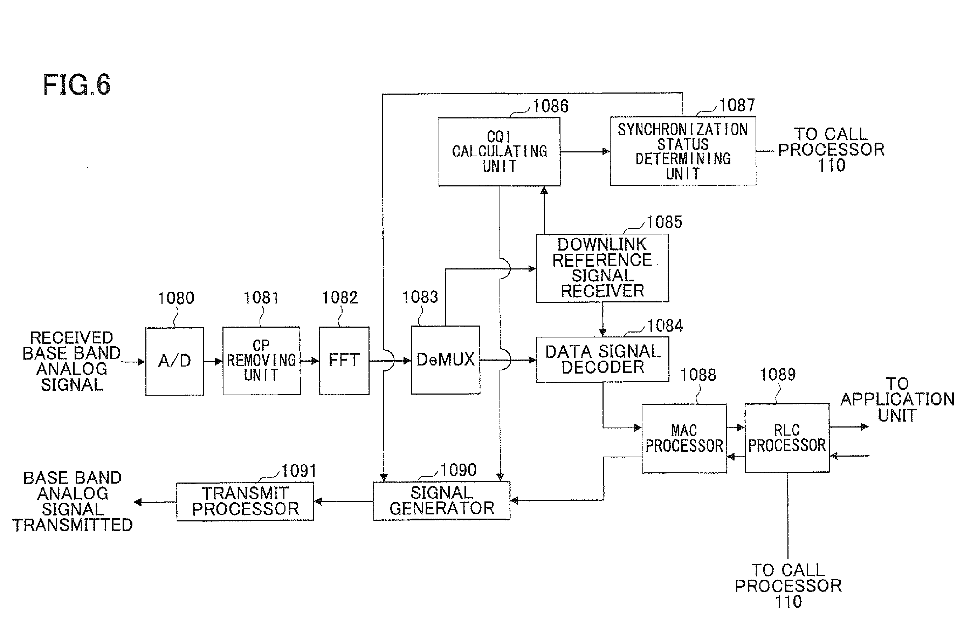

Next, a base band signal processor 108 is described with reference to FIG. 6.

The base band signal processor 108 includes an analog/digital converter (A/D) 1080, a CP removing unit 1081, an FFT 1082, a DeMUX 1083, a data signal decoder 1084, a downlink reference signal receiver 1085, a CQI calculating unit 1086, a synchronization status determining unit 1087, a MAC processor 1088, an RLC processor 1089, a signal generator 1090, and a transmit processor 1091.

The analog/digital converter (A/D) 1080 converts a base band analog signal input from the transmitter/receiver 106 to a digital signal which is input to the CP removing unit 1081.

The CP removing unit 1081 removes a CP from a receive symbol, retains an effective symbol portion, and inputs the effective symbol portion to the FFT 1082.

The fast Fourier transformer (FFT) 1082 Fast Fourier transforms an input signal, which is OFDM demodulated, which demodulated signal is input to the DeMUX 1083.

The demultiplexer (DeMUX) 1083 demultiplexes a received signal into a downlink reference signal and a data signal, which downlink reference signal is input to the downlink reference signal receiver 1085, and which data signal is input to the data signal decoder 1084.

The downlink reference signal receiver 1085 performs a channel estimation based on the downlink reference signal input and determines what channel compensation is to be performed on the received data signal, in other words, calculates a channel estimation value. The downlink, reference signal receiver 1085 inputs the calculated channel estimation value to the data signal decoder 1084.

Moreover, the downlink reference signal receiver 1085 inputs the downlink reference signal and the channel estimation value into the CQI calculating unit 1086.

The data signal decoder 1084 receives the channel estimation results from the downlink reference signal receiver 1085, and, based on the channel estimation results, compensates for the downlink data signal, an reconstructs the data signal transmitted from the base station apparatus 200. Here, the data signal means downlink control channel, downlink shared channel, and broadcast channel signals transmitted from the base station apparatus 200. Here, the above-described broadcast channel, more specifically, means a physical broadcast channel (P-BCH), or a dynamic broadcast channel (D-BCH: dynamic broadcast channel). Moreover, the downlink control channel includes a physical downlink control channel (PDCCH)-mapped DL scheduling information, a UL scheduling grant, acknowledgement information for uplink shared channel, etc.

The data signal decoder 1084 inputs the decoded data signal to the MAC processor 1088. Moreover, the data signal decoder 1084 obtains information included in the P-BCH and D-BCH, and reports the obtained results to each unit within a user apparatus 100n as needed.

The CQI calculator 1086 receives the downlink reference signal and the channel estimation value from the downlink reference signal receiver 1085. Then, the CQI calculating unit 1086 calculates a CQI based on the downlink reference signal and the channel estimation value.

More specifically, the CQI calculator 1086 may calculate an SIR of the downlink reference signal, and calculate a CQI using the SIR, and a reference table as shown in FIG. 1. Table 1 shows a correspondence between the CQI and SIR values.

**Table 1**

| CQI | VALUE OF SIR [dB] (BELOW STATED AS X) |
|---|---|
| 0 | X < -3.5 dB |
| 1 | -3.5 dB ≦ X < -2.5 dB |
| 2 | -2.5 dB ≦X < -1.5 dB |
| 3 | -1.5 dB ≦ X < 0.5 dB |
| ... | ... |
| 30 | 25.5 dB ≦ X |

Values shown in Table 1 are exemplary, so that different values may be set appropriately. Moreover, the SIR values shown in Table 1 may be an SIR, which can be received at an error rate not above a predetermined error rate when a data signal including a predetermined modulation scheme, a number of resource blocks, and a data size, for example, is received, which is evaluated in advance, and set based on the evaluated result. Moreover, in Table 1, 31 types of values are defined as CQI values. Instead, 16 types of values may be defined.

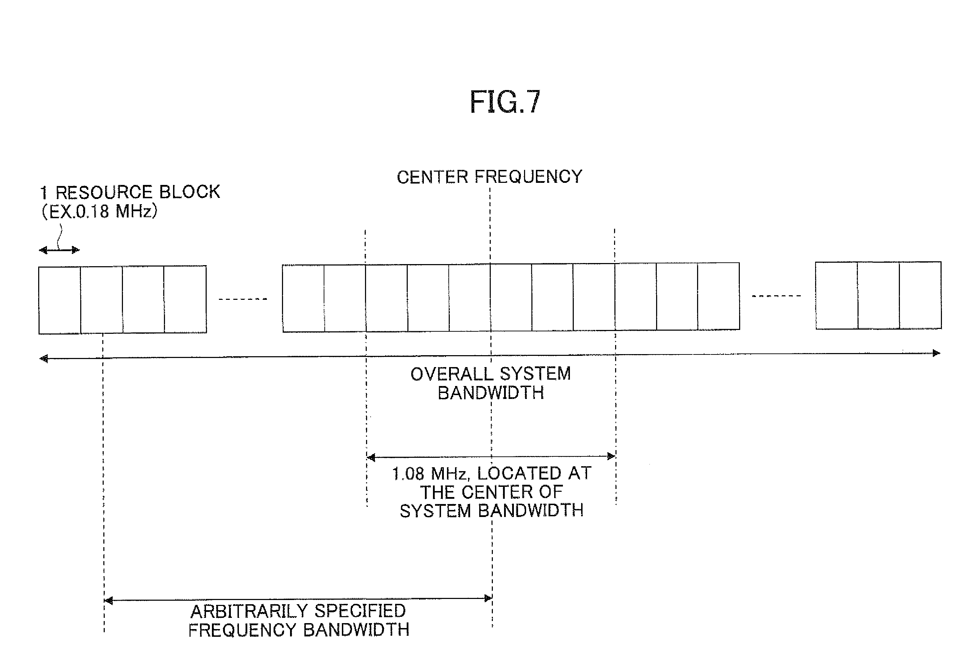

Here, the CQI calculating unit 1086, as shown in FIG. 7, may calculate an average value on frequency bandwidths within the overall system bandwidth, or an average value of 1.08 MHz, including a central frequency of a system frequency that is located at a center of the system bandwidth. FIG. 7 shows 6 resource blocks, including a center frequency of the system bandwidth. In FIG. 7, the horizontal axis represents frequency. In the LTE, the frequency bandwidth of 1.08 MHz that is located at the center of the system bandwidth is a frequency bandwidth within which a synchronization channel (SCH) is transmitted. Alternatively, a CQI value may be calculated per resource block, or in a more flexible manner, a CQI value may be calculated for a frequency bandwidth arbitrarily set within the system bandwidth. The average value for the frequency bandwidth of the overall system bandwidth may be called a wideband CQI.

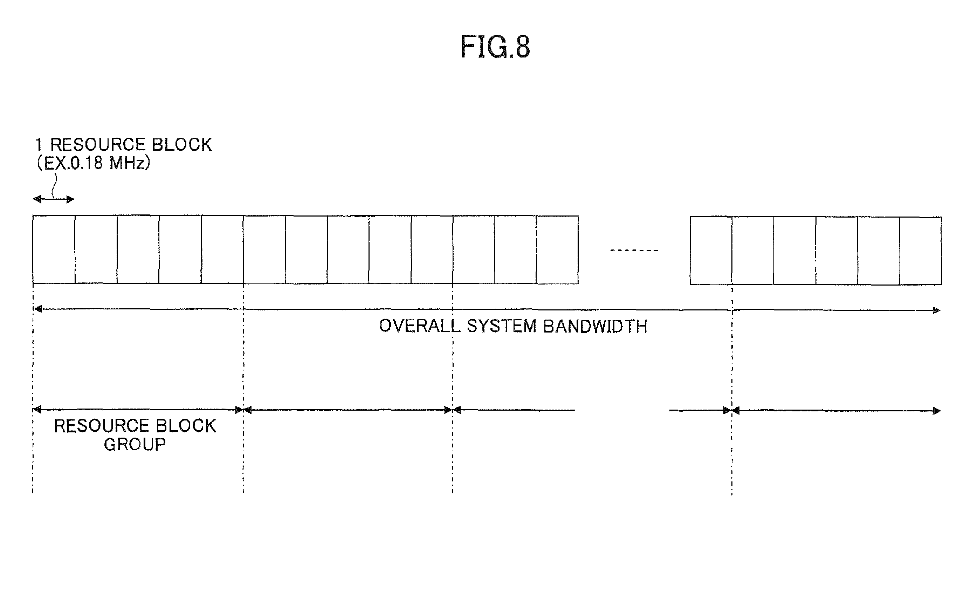

Alternatively, as shown in FIG. 8, a CQI value may be calculated for each frequency bandwidth (below called a resource block group) in which multiple resource blocks are grouped. In FIG. 8, a case is shown, as an example, of one resource block group in which five resource blocks are grouped. In FIG. 8, the horizontal axis is frequency. Moreover, for calculating CQI values for respective resource blocks or resource block groups, the CQI values of M (where M is an integer larger than zero) resource blocks or resource block groups having the largest CQI values may be calculated. The value of M is specified by the base station apparatus 200 using broadcast information or an RRC message. Alternatively, the user apparatus 100ₙ may calculate all of the CQI values of the resource block or the resource block group, and reports the calculated values to the base station apparatus 200. The CQI value for each resource group may be called Subband CQI. Moreover, in the example as described above, the number of resource blocks in one resource block group is set as 5, but it may take any value other than 5.

Then, the CQI calculator 1086 inputs the calculated CQI value to the synchronization status determining unit 1087 and the signal generator 1090.

The synchronization status determining unit 1087 receives the CQI value from the CQI calculating unit 1086. Then, based on the CQI value, a downlink synchronization status is determined. For example, when the CQI value is 0, the synchronization status determining unit 1087 may determine that the downlink synchronization is not established (is out-of-sync), and when the CQI value is not 0, it may determine that the downlink synchronization established (is not out-of-sync).

Here, in a status in which the downlink synchronization is determined to be established, when a status of the CQI being 0 continues for no less than a predetermined number (T4) of time intervals, downlink synchronization between the mobile station 100ₙ and the base station apparatus 200 may be determined to be not established. Alternatively, in a status such that the downlink synchronization is determined to be established, when a ratio of a time period in which the CQI value is 0 to a predetermined time interval T4 is no less than a threshold TH5, the downlink synchronization between the mobile station 100ₙ and the base station 200 may be determined to be not established.

On the other hand, in a status in which the downlink synchronization is determined to be not established, when at least one event of the CQI value not being zero occurs, the synchronization status determining unit 1087 may determine the downlink synchronization between the mobile station 100ₙ and the base station apparatus 200 to be established. Alternatively, in a status in which the downlink synchronization is determined to be not established, when a status of the CQI value being not 0 continues for no less than a predetermined number (T4) of time intervals, it may determine the downlink synchronization between the mobile station 100ₙ and the base station apparatus 200 to be established. Alternatively, in a status in which the downlink synchronization is determined to be not established, when a ratio of time period in which the CQI value is 0 to a predetermined time interval T4 is less than a threshold TH5, it may determine the downlink synchronization between the mobile station 100ₙ and the base station 200 to be established. Also for the threshold TH5, a hysteresis may be taken into account as described below for TH2 and TH3.

The status in which the CQI value is 0 can be assumed as an out-of-range status. For example, in the 3GPP HSDPA (high speed downlink packet access), the CQI value being 0 is defined as out-of-range (see Non-patent document 5, for example).

Alternatively, even for a case other than the CQI value being zero, the synchronization status determining unit 1087 may be arranged to determine the synchronization to be not established when it can be assumed that the synchronization is not established. Such an arrangement as described above makes it possible to determine a synchronization status even when the CQI value is not 0. For example, when the CQI value is less than the predetermined threshold TH1, it may determine that the synchronization is not established, whereas when the CQI value is no less than The, it may determine that the synchronization is established. For example, as the TH1 value, a value such as 1 or 2 may be set. The above-listed value of 1 or 2 is exemplary, so that any value other than what is listed in the above may be set.

Alternatively, the synchronization status determining unlit 1087 may use the hysteresis when determining the synchronization status using the CQI value. For example, in a status in which the synchronization is determined to be established, when the CQI value is less than a predetermined threshold TH2, it may determine that the synchronization is not established, while in a status in which the synchronization is not established, when the CQI value is no less than a predetermined value TH3, it may determine that the synchronization is established. The difference between the TH2 and the TH3 corresponds to the hysteresis. For example, 1 may be set as the TH2 value, and a value of 3 may be set as the TH3 value. In this case, 2, which is a difference between 3 and 1, corresponds to the hysteresis. The above-listed value of 1 or 3 is exemplary, so that any value other than what is listed in the above may be set.

Here, in a status in which the downlink synchronization is determined to be established, when a status of the CQI value being less than a predetermined threshold TH1 (or TH2) continues for no less than a predetermined number (T4) of time intervals, the synchronization status determining unit 1087 may determine the downlink synchronization between the mobile station 100ₙ and the base station apparatus 200 to be not established. Alternatively, in a status in which the downlink synchronization is determined to be established, when a ratio of time period in which the CQI value is less than a predetermined threshold TH1 (or TH2) to a predetermined time interval T4 is no less than a predetermined threshold TH5, it may determine the downlink synchronization between the mobile station 100ₙ and the base station apparatus 200 to be not established. For example, as a T4 value, a value such as 200 ms may be set. Moreover, as a TH5 value, a value such as 50% may be set, for example. The above-listed value of 200 ms or 50% is exemplary, so that any value other than what is listed in the above may be set.

On the other hand, in a status in which the downlink synchronization is determined to be not established, when at least one event of the CQI value being no less than the predetermined threshold TH1 (or TH3) occurs, the synchronization status determining unit 1087 may determine that the downlink synchronization between the mobile station 100ₙ and the base station apparatus 200 is established. Alternatively, in a status such that the downlink synchronization is determined to be not established, when a status of the CQI value being no less than a predetermined threshold TH1 (or TH3) continues for no less than a predetermined number (T4) of time intervals, the synchronization status determining unit 1087 may determine that the downlink synchronization between the mobile station 100ₙ and the base station apparatus 200 may be determined to be established. Alternatively, in a status in which the downlink synchronization is determined to be not established, when a ratio of time period in which the CQI value is not less than a predetermine threshold TH1 (or TH3) to a predetermined time interval T4 is no less than a predetermined threshold TH5, a downlink synchronization between the mobile station 100ₙ and the base station apparatus 200 may be determined to be established. Also for the threshold TH5, a hysteresis may be taken into account as for the TH2 or TH3. For example, as a T4 value, a value such as 200 ms may be set. Moreover, as a TH5 value, a value such as 50% may be set, for example. The above-listed value of 200 ms or 50% is exemplary, so that any value other than what is listed in the above may be set.

The threshold such as the TH1, the TH2, the TH3, the TH5, or the time interval T4 may be a value set as an internal parameter of a user apparatus, or may be a value reported from outside.

For example, at the synchronization status determining unit 1087, when the threshold such as the TH1, the TH2, the TH3, the TH5, or the time interval T4 is a value reported from outside, the threshold such as the TH1, the TH2, the TH3, the TH5, or the time interval T4 may be reported from the base station apparatus 200 using the downlink broadcast channel or the RRC message. For example, when the threshold such as the TH1, the TH2, the TH3, the TH5, or the time interval T4 are reported using the broadcast channel, the base band signal processor 108 performs a receive process on the thresholds such as the TH1, the TH2, the TH3, and the TH5, and the time interval T4, and reports the results to the call processor 110. Then, the call processor 110 reports, to the synchronization status determining unit 1087, the thresholds TH1, TH2, TH3 and TH5 and the time interval T4.

Alternatively, when the thresholds such as the TH1, the TH2, the TH3, and the TH5, and the time interval T4 are reported using the RRC message, the base band signal processor 108 performs a receive process on the thresholds such as the TH1, the TH2, the TH3, and the TH5, and the time interval T4, and reports the results to the call processor 110. Then, the call processor 110 reports, to the synchronization status determining unit 1087, the thresholds TH1, TH2, TH3, and TH5, and the time interval T4.

Reporting the thresholds TH1, TH2, TH3, and TH5, and the time interval T4 using the broadcast channel makes it possible to determine the downlink synchronization status using a common decision criteria within the cell 50. On the other hand, when the thresholds TH1, TH2, TH3, and TH5 and the time interval T4 are reported using the RRC message, the RRC message is separately reported to each user apparatus, so that the downlink synchronization status can be determined using decision criteria suited to each user apparatus.

Only when the thresholds TH1, TH2, TH3, and TH5 and the time interval T4 are reported using the broadcast information or the RRC message, the synchronization status determining unit 1087 determiners the downlink synchronization status using the reported values, and, when they are not reported, it may perform an operation of determining the downlink synchronization status using a parameter saved inside.

Moreover, based on the status of the user apparatus 100ₙ, the synchronization status determining unit 1087 may determine the downlink synchronization status as described above based on the status of the user apparatus 100ₙ.

For example, when the user apparatus 100ₙ is in an RRC connected status, the synchronization status determining unit 1087 may determine the downlink synchronization status as described above, or may determine the downlink synchronization status as described above, or when the user apparatus 100ₙ is in an idle status, it may determine the downlink synchronization status as described above. Alternatively, when the user apparatus 100ₙ is in the RRC connected status and when it is in the idle status, the synchronization status determining unit 1087 may determine the synchronization status as described above.

Alternatively, when the user apparatus 100ₙ is in the RRC connected status and in a non-DRX status, the synchronization status determining unit 1087 may determine the downlink synchronization status as described above, or when the user apparatus 100ₙ is in the RRC connected status and in a DRX status, it may determine the downlink synchronization status as described above.

Alternatively, when the user apparatus 100ₙ is in the RRC connected status and in the non-DRX status and when it is in the RRC connected status and in the DRX status, the synchronization status determining unit 1087 may determine the downlink synchronization status as described above.

Alternatively, when the user apparatus 100ₙ is in the RRC connected status and in a status in which an uplink dedicated resource is released, the synchronization status determining unit 1087 may determine the downlink synchronization status as described above, or when the user apparatus 100ₙ is in the RRC connected status and in the status in which the uplink dedicated resource is released, it may determine the downlink synchronization status as described above. Alternatively, when the user apparatus 100ₙ is in the RRC connected status and in the status in which the uplink dedicated resource is released and when the user apparatus 100ₙ is in an RRC connected status and when the user apparatus 100ₙ is in the RRC connected status and in a status in which the uplink dedicated resource is not released, the synchronization status determining unit 1087 may determine the downlink synchronization status as described above.

The above-described thresholds TH1, TH2, TH3, and TH5, and the time interval T4 may be defined for each status of the user apparatus 100ₙ as described in the explanation of the call processor 210 of the base station apparatus 200. Here, each status of the user apparatus 100ₙ may be, for example, the RRC connected status; the idle status; the RRC connected status and the DRX status; the RRC connected status and the non-DRX status; the RRC connected status and the status in which the uplink dedicated resource is released/is not released.

The synchronization status determining unit 1087 reports the downlink synchronization state of the user apparatus 100ₙ to the call processor 110 (upper layer) and the signal generator 1090. When, after receiving, from the synchronization status determining unit 1087, information that the downlink synchronization status is not established, the status (a status that the downlink synchronization status is established) continues, the call processor 110 may determine that it performs a process of reestablishing a connection between the base station apparatus 200 and the user apparatus 100ₙ, and perform the process of reestablishing the connection.

The MAC processor 1088 receives, from the data signal decoder 1084, decoded downlink scheduling information, UL scheduling grant, acknowledgement information for uplink shared channel, and downlink shared channel.

Based on the UL scheduling grant input, the MAC processor 1088 performs a transmit process such as determination of an uplink user data transmit format, retransmission control (HARQ) in the MAC layer, etc. In other words, when instructed, from the base station apparatus 200 using the UL scheduling grant input from the data signal decoder 1084, to communicate using a shared channel in uplink, it performs a transmit process such as determining a transmit format and retransmission control (HARQ) for packet data residing in a data buffer within the user apparatus 100ₙ, and provides the packet data to the signal generator 1090.

For downlink, the MAC processor 1088 performs a receive process, etc., in which MAC retransmission control of downlink packet data is performed based on the DL scheduling information received from the data signal decoder 1084, for example.

The RLC (radio link control) processor 1089 performs, for uplink, an RLC layer transmit process such as RLC (radio link control) retransmission control and packet data segmentation/concatenation, and, for downlink, an RLC layer receive process such as RLC, retransmission control and packet data segmentation/concatenation. In the RLC processor 1089, the PDCP layer process as well as the RLC layer process may be performed.

Moreover, the RLC processor 1089 reports, to the call processor 110, information included in an RRC message and broadcast channel transmitted from the base station apparatus 200.

The signal generator 1090 receives, from the synchronization status determining unit 1087, the downlink synchronization status of the user apparatus 100ₙ and receives, from the CQI calculating unit 108, a CQI value.

The signal generator 1090 performs a process (e.g., encoding, data modulation, etc.) of generating a signal such as a sounding RS and uplink shared channel transmitted uplink, an uplink control channel (e.g., acknowledgement information for downlink shared channel, downlink quality information (CQI)), a preamble signal (random access channel) for random access. The processed signal is transmitted to the transmit processor 1091.

Moreover, the signal generator 1090 stops uplink transmission when the result of determining the downlink synchronization of the user apparatus 100ₙ that the synchronization is not established is received from the synchronization status determining unit 1087. As a result, when the downlink synchronization status is not established, the user apparatus 100ₙ does not transmit an uplink signal. The uplink signal includes, for example, an uplink shared channel, a sounding RS, an uplink control channel, for example, acknowledgement information for a downlink shared channel, downlink quality information CQI), etc.

Even when the downlink synchronization is not established, the random access channel only may be transmitted. In other words, when the downlink synchronization is not established, the signal generator 1090 stops a process of transmitting a signal other than a random access channel.

Alternatively, when the downlink synchronization is not established, the signal generator 1090 stops a process of transmitting all uplink signals including the random access channel.

The transmit processor 1091 performs a transmit process such as DFT, IFFT, and CP insertion.

The call processor 110 performs status control of the mobile station 100ₙ, call process such as releasing, communications channel setup and handover. For example, the call processor 112 receives an RRC message and broadcast information transmitted from the base station apparatus 200, and reports to each unit of the mobile station 100ₙ, information included in the RRC message and broadcast information as needed. More specifically, the call processor 110 receives the thresholds TH1, TH2, TH3, and TH5 and the time interval T4 that are mapped to the RRC message or the broadcast channel. Then, it reports the thresholds TH1, TH2, TH3, and TH5, and the time interval T4 to the synchronization status determining unit 1087.

The application unit 112 performs a process for a layer upper to a physical layer, a MAC layer, an RLC layer, or a PDCP layer.

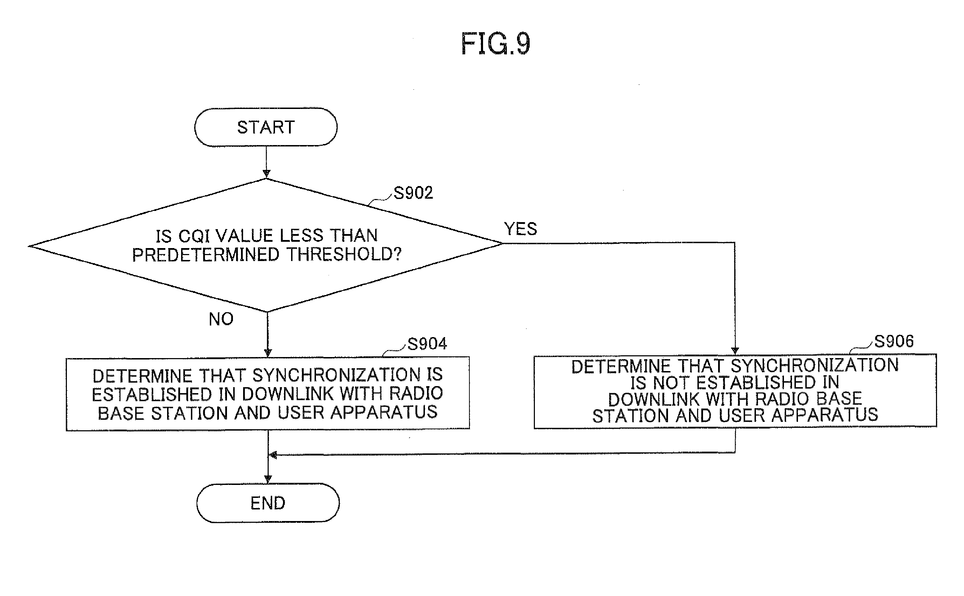

Next, a method of detecting downlink out-of-sync as a transmission control method in the user apparatus 100ₙ according to the present embodiment is described with reference to FIG. 9.

The base station apparatus 200 transmits a downlink signal. For example, the base station apparatus 200 transmits a downlink shared channel (DL-SCH), DL scheduling information, a UL scheduling grant, acknowledgement information on UL-SCH, a broadcast channel (BCH), a paging channel (PCH), a downlink reference signal, etc.

The synchronization status determining unit 1087 performs a determining process on the downlink synchronization status based on downlink quality information generated using a downlink reference signal (step S902). For example, the CQI: calculating unit 1086 calculates an SIR of the downlink reference signal, and calculates a CQI using the SIR, and a reference table as described with reference to Table 1. Based on the CQI value, the synchronization status determining unit 1087 determines the downlink synchronization status. For example, when the CQI value is less than a predetermined threshold, the synchronization status determining unit 1087 determines that the synchronization is not established, and when the CQI value is no less than the threshold, it determines that the synchronization is established.

When the CQI value is not less than a predetermined threshold (step S902: NO), the synchronization status determining unit 1087 determines that the synchronization is established in downlink with the base station apparatus 200 and the user apparatus (step S904).

On the other hand, when the CQI value is less than a predetermined threshold (step S902: YES), the synchronization status determining unit 1087 determines that the synchronization is not established in downlink with the base station apparatus 200 and the user apparatus (step S906).

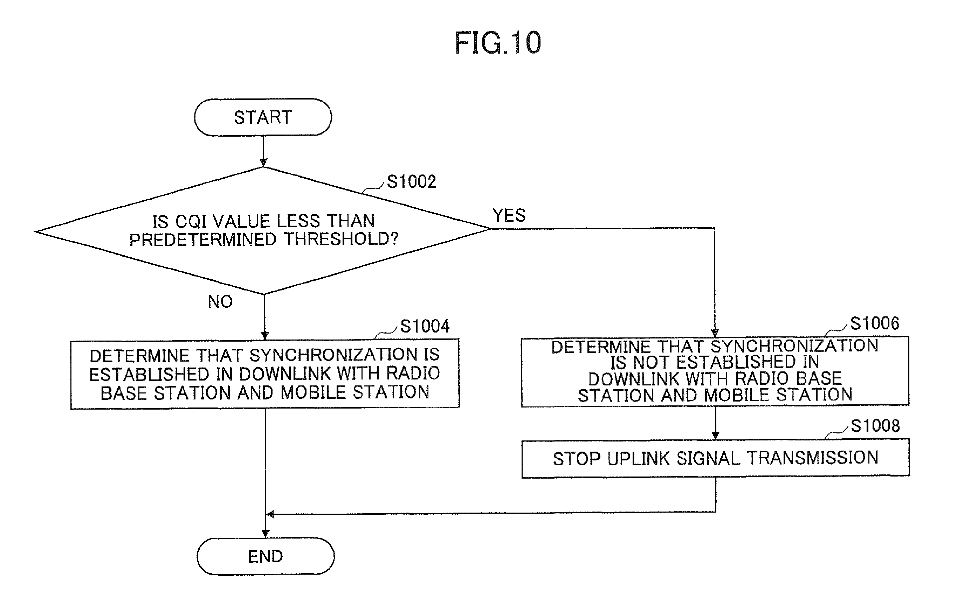

Next, a method of detecting downlink out-of-sync as a further transmission control method in the user apparatus 100ₙ according to the present embodiment is described with reference to FIG. 10.

Steps S1002-S1006 in a method of detecting downlink out-of-sync as another transmission control method according to the present embodiment are similar to steps S902-S906 in the method of detecting downlink out-of-sync that is described with reference to FIG. 9.

In step S1006, when the CQI value is less than a predetermined threshold (step S1002: YES), the synchronization status determining unit 1087 determines that the synchronization is not established in downlink with the base station apparatus 200 and the user apparatus (step S1006). Thereafter, the signal generator 1090 stops transmitting an uplink signal (step S1008). The uplink signal includes, for example, an uplink shared channel, a sounding RS, an uplink control channel, for example, acknowledgement information on downlink shared channel, downlink quality information (CQI), etc. Here, as described above, even when it is determined that the uplink signal transmission be stopped, the signal generator 1090 may operate such that a random access channel only may be transmitted.

Moreover, in step S1008, in addition to the above process, the synchronization status determining unit 1087 may report the downlink, synchronization status of the user apparatus 100ₙ to the call processor 110 (upper layer). In this case, for example, when, after receiving, from the synchronization status determining unit 1087, information that the downlink synchronization status is not established, the status (a status that the downlink synchronization status is not established) continues for a certain time interval, the call processor 110 may determine that it performs a process of reestablishing a connection between the base station apparatus 200 and the user apparatus 100ₙ, and perform the process of reestablishing the connection.

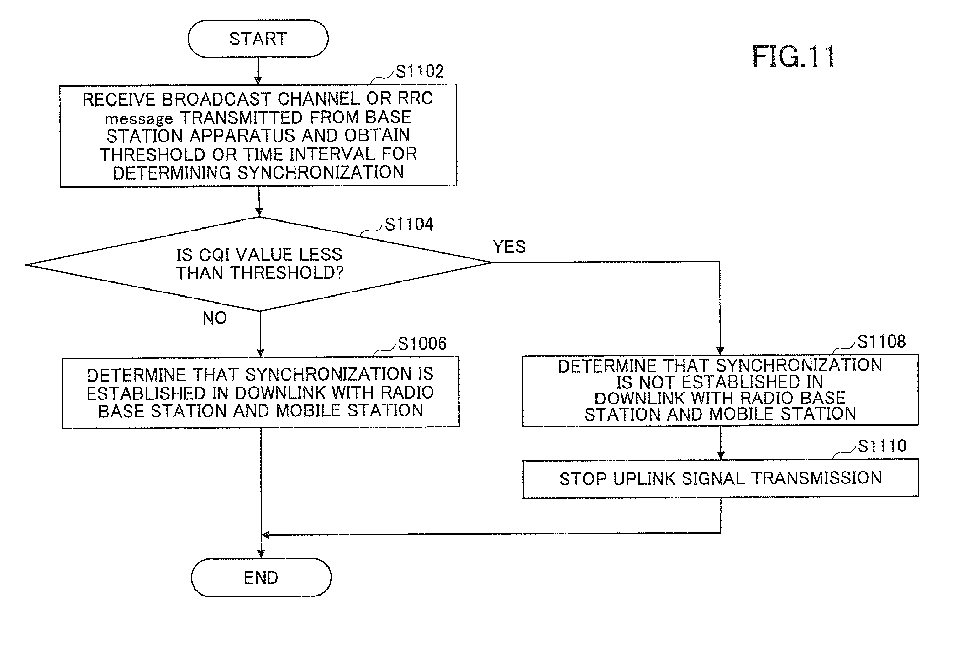

Next, a method of detecting downlink out-of-sync as a further transmission control method in the user apparatus 100ₙ according to the present embodiment is described with reference to FIG. 11.

Steps S1104-S1110 in a method of detecting downlink out-of-sync as a further transmission control method according to the present embodiment are similar to steps S1002-S1006 in the method of detecting the downlink out-of-sync that is described, with reference to FIG. 10.

A broadcast channel or an RRC message transmitted from the base station apparatus 200 is received, and a threshold and a time interval for synchronization determination are obtained (step S1102). For example, as described above, the base station apparatus 200 reports, using the broadcast channel or the RRC message to the user apparatus 100ₙ, a time interval T4 and thresholds TH1, TH2, TH3, and TH5 used at the time the user apparatus 100ₙ determines the downlink synchronization status based on the CQI value. The broadcast channel and the RRC message are transmitted to the user apparatus 100ₙ.

According to the present embodiment, it is possible for the user apparatus to grasp the downlink synchronization status, and to stop the uplink transmission when the downlink synchronization is not established. In this case, it is made possible to reduce amount of interference to other cells or other users. As a result, a user apparatus and a communications control method which make it possible to improve the uplink transmission performance and capacity may be realized.

Next, a radio communications system to which base station apparatuses and user apparatuses according to other embodiments of the present invention are applied is described.

A configuration of the radio communications system according to the present embodiments is similar to the configuration described with reference to FIG. 1. A configuration of the base station apparatus according to the present embodiments is similar to the configuration described with reference to FIGS. 3 and 4. In this case, the thresholds TH1, TH2, TH3, and TH5, and time interval T4 used at the time of determining the downlink synchronization status as described above, are defined as a threshold or time interval used at the time of determining the downlink synchronization status based on the below-described RSRP value. Below, the above value is described as thresholds TH1', TH2', TH3', and TH5', and time interval T4' . A base station apparatus 200 reports, to the user apparatus 100ₙ, the threshold TH1' , TH2', TH3' , and TH5' and time interval T4' using a broadcast channel or an RRC message.

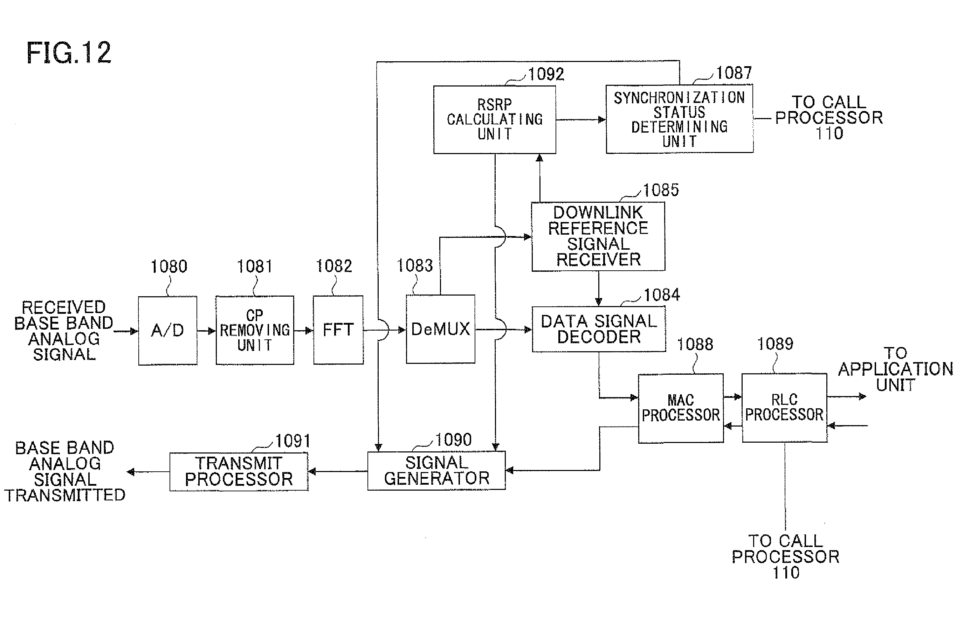

As shown in FIG. 12, a user apparatus 100ₙ according to the present embodiment is different from the user apparatus described with reference to FIG. 6 in that an RSRP calculating unit 1092 is provided instead of a CQI calculating unit 1086. The RSRP (reference symbol received power) means a received power of a downlink reference signal. The RSPP calculating unit 1092 calculate the downlink reference signal received power (RSRP) using a downlink reference signal and a channel estimation value that are input using the downlink reference signal receiver 1085 (See Non-patent document 6 for definition of the received power of the downlink reference signal). Even for the RSRP, in a manner similar to the CQI, the measurement interval in the frequency direction may be the overall systems bandwidth, a resource block located within the systems bandwidth, or a resource block group in which several resource blocks are grouped.

Then, the RSRP calculating unit 1092 inputs, to the synchronization status determining unit 1087 and the signal generator 1090, the calculated RSRP value.

The synchronization status determining unit 1087 receives the RSRP value from the RSRP calculating unit 1092. Then, based on the RSRP value, the downlink synchronization status is determined. For example, the synchronization status determining unit 1087 determines that the downlink synchronization is not established when the RSRP value is zero, and the downlink synchronization is established when the RSRP value is not zero.

The status in which the RSRP value is 0 can be assumed as an out-of-range status.

Alternatively, even for a case other than the RSRP value being zero, the synchronization status determining unit 1087 may be arranged to determine that the synchronization is not established when it can be assumed that the synchronization is not established. Such an arrangement as described above makes it possible to determine the synchronization status even when the RSRP value is not 0. For example, when the RSRP value is less than the predetermined threshold TH1', it may be determined that the synchronization is not established, whereas when the RSRP value is no less than TH1', it may be determined that the synchronization is established. For example, as a This value, a value such as -130 dBm may be set. The above-listed value of -130 dBm is exemplary, so that any other value may be set.

Alternatively, the synchronization status determining unit 1087 may use hysteresis when determining the synchronization status using the RSRP value. For example, in a status in which the synchronization is determined to be established, when the RSRP value is less than a predetermined threshold TH2', it may be determined that the synchronization is not established, while in a status in which the synchronization is not established, when the RSRP value is no less than a predetermined value TH3', it may be determined that the synchronization is established. The difference between TH2' and TH3' corresponds to hysteresis. For example, -133 dBm may be set as the TH2' value, and a value of -130 dBm may be set as a value of TH3'. The above-listed value of -133 dBm or -130dBm is exemplary, so that any value other than what is listed in the above may be set.

Here, in a status in which the downlink synchronization is determined to be established, when a status in which the RSRP value is less than a predetermined value TH1' (or TH2') continues for no less than a predetermined number (T4') of time intervals, a downlink synchronization between the mobile station 100ₙ and the base station apparatus 200 may be determined to be not established. Alternatively, in a status in which the downlink synchronization is determined to be established, when a ratio of time period in which an RSRP value is less than a predetermined threshold TH1' (or TH2') to a predetermined time interval T4' is no less than a predetermined threshold TH5', a downlink synchronization between the mobile station 100ₙ and the base station apparatus 200 may be determined to be not established. For example, as the T4' value, a value such as 200 ms may be set. Alternatively, as the TH5' value, a value such as 50% may be set, for example. The above-listed value of 200 ms or 50% is exemplary, so that any value other than what is listed in the above may be set.

On the other hand, in a status in which the downlink synchronization is determined not to be established, when at least one event of the RSRP value not being no less than the predetermined threshold TH1' (or TH3') occurs, the synchronization status determining unit 1087 may determine that the downlink synchronization between the mobile station 100ₙ and the base station apparatus 200 is established. Alternatively, in a status such that the downlink synchronization is determined to be not established, when a status of the RSRP value being no less than a predetermined threshold TH1' (or TH3') continues for no less than a predetermined number (T4') of time intervals, the synchronization status determining unit 1087 determines that a downlink synchronization between the mobile station 100ₙ and the base station apparatus 200 may be determined to be established. Alternatively, in a status such that the downlink synchronization is determined to be not established, when a ratio of time period in which a RSRP value is no less than a predetermined threshold TH1' (or TH3') to a predetermined time interval T4' is no less than a predetermined threshold TH5', a downlink synchronization between the mobile station 100ₙ and the base station apparatus 200 may be determined to be established. Also for the threshold TH5', a hysteresis may be taken into account as for TH2' or TH3'. As the T4' value, a value such as 200 ms may be set, for example. Alternatively, as the TH5' value, a value such as 50% may be set, for example. The above-listed value of 200 ms or 50% is exemplary, so that any value other than what is listed in the above may be set.

At the sync status determining unit 1087, the thresholds such as TH1', TH2', TH3' , and TH5', and the time interval T4 may be reported from the base station apparatus 200 using the downlink broadcast channel and the RRC message. For example, when the thresholds such as TH1', TH2' , TH3' , and TH5', and the time interval T4 are reported using the broadcast channel, the base band signal processor 108 performs a receive process of the thresholds such as TH1', TH2', TH3', and TH5', and the time interval T4', and informs the call processor 110. Then, the call processor 110 reports the thresholds TH1', TH2', TH3', and TH5' and the time interval T4' to the synchronization status determining unit 1087.

Alternatively, when the thresholds such as TH1', TH2', TH3' , and TH5', and the time interval T4 are reported using the RRC message, the base band signal processor 108 performs a receive process on the thresholds such as TH1', TH2' , TH3', and TH5', and the time interval T4', and reports the result to the call processor 110. Then the call processor 110 reports, to the synchronization status determining unit 1087, the thresholds TH1', TH2', TH3', and TH5', and the time interval T4'.

Reporting the thresholds TH1', TH2', TH3', and TH5', and the time interval T4' using the broadcast channel makes it possible to determine the downlink synchronization status using common decision criteria within the cell 50. On the other hand, when the thresholds TH1', TH2', TH3', and TH5' and the time interval T4' are reported using the RRC message, the RRC message is separately reported to each user apparatus, so that the downlink synchronization status can be determined using decision criteria suited to each user apparatus.

The synchronization status determining unit 1087 reports the downlink synchronization of the user apparatus 100ₙ to the call controlled 110 (upper layer) and the signal generator 1090. When, after receiving, from the synchronization status determining unit 1087, information that the downlink synchronization status is not established, for example, the status (a status that the downlink synchronization status is not established) continues, the call processor 110 may determine that it performs a process of reestablishing a connection between the base station apparatus 200 and the user apparatus 100ₙ, and perform the process of reestablishing the connection.

Moreover, in a manner similar to the case in which the downlink synchronization is determined based on the CQI value, the signal generator 1090 stops uplink transmission when it receives, from the synchronization status determining unit 1087, results of determining that the synchronization is not established for the downlink synchronization status of the user apparatus 100ₙ.

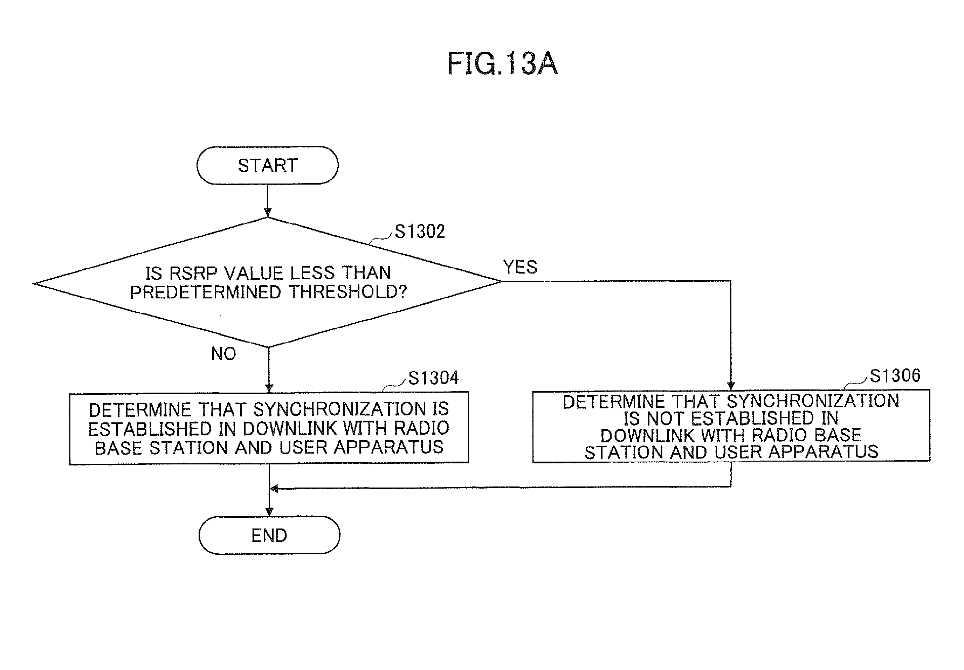

Next, a method of detecting downlink out-of-sync as a transmission control method in the user apparatus 100n according to the present embodiment is described with reference to FIG. 13A.

The base station apparatus 200 transmits a downlink signal. For example, the base station apparatus 200 transmits a downlink shared channel (DL-SCH), DL scheduling information, a UL scheduling grant, acknowledgement information on UL-SCH, a broadcast channel (BCH), a paging channel (PCH), a downlink reference signal, etc.

The synchronization status determining unit 1087 performs a determining process on the downlink synchronization status based on downlink quality information generated using the downlink reference signal (step S1302). For example, the RSRP calculating unit 1092 calculates an RSRP of the downlink reference signal. Based on the RSRP value, the synchronization status determining unit 1087 determines a downlink synchronization status. For example, when the RSRP value is less than a predetermined threshold, the synchronization status determining unit 1087 determines that the synchronization is not established, and when the RSRP value is no less than the threshold, it determines that the synchronization is established.

When the RSRP value is not less than the predetermined threshold (step S1302: NO), the synchronization status determining unit 1087 determines that the synchronization is established in downlink with the base station apparatus 200 and the user apparatus (step S1304).

On the other hand, when the RSRP value is less than the predetermined threshold (step S1302: YES), the synchronization status determining unit 1087 determines that the synchronization is not established in downlink with the base station apparatus 200 and the user apparatus (step S1306).

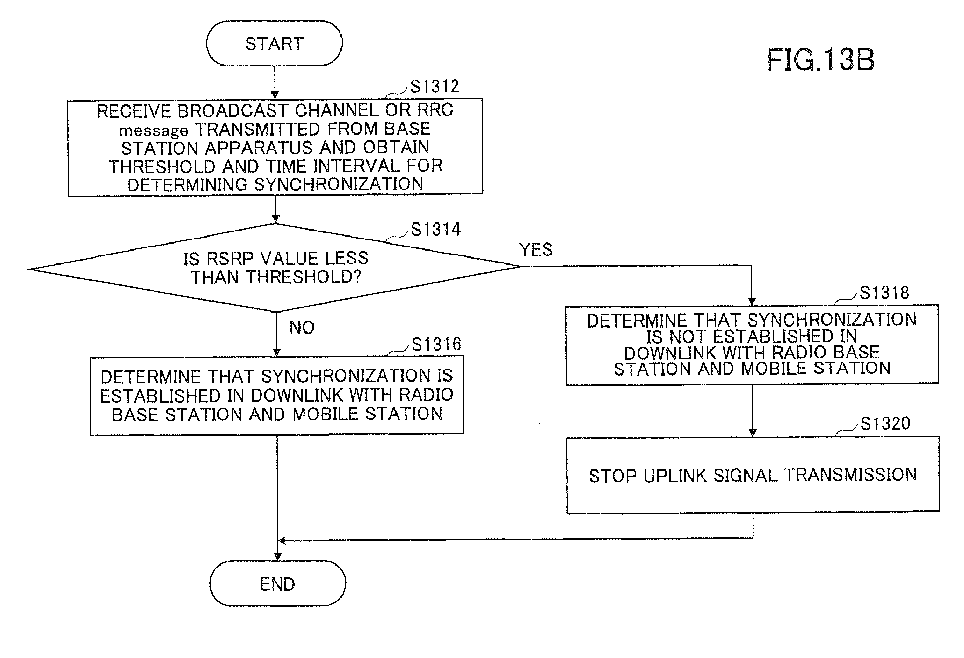

Next, a method of detecting downlink out-of-sync as another transmission control method in the user apparatus 100ₙ according to the present embodiment is described with reference to FIG. 13B.

The synchronization status determining unit 1087 in the user apparatus 100ₙ receives a broadcast channel or an RRC message transmitted from the base station apparatus 200, and obtains a threshold and a time interval for determining synchronization (step S1312). For example, as described in the above, the base station apparatus 200 reports, using the broadcast channel or the RRC message to the user apparatus, a time interval T4' and thresholds TH1', TH2', TH3', and TH5' used at the time the user apparatus 100ₙ determines the downlink synchronization status based on the RSRP value. The broadcast channel and the RRC message are transmitted to the user apparatus 100ₙ.

Next, the synchronization status determining unit 1087 performs a determining process on the downlink synchronization status based on a value of the RSRP generated using the downlink reference signal (step S1314). In other words, the RSRP calculating unit 1092 calculates the RSRP of the downlink reference signal, and the synchronization status determining unit 1087 determines the downlink synchronization status based on the RSRP value. For example, when the RSRP value is less than the predetermined threshold, the synchronization status determining unit 1087 determines that the synchronization is not established, and when the RSRP value is no less than the threshold, it determines that the synchronization is established. Here, the threshold mean the threshold TH1', TH2', TH3', TH5' or the time interval T4'.

When the RSRP value is not less than the predetermined threshold (step S1314: NO), the synchronization status determining unit 1087 determines that the synchronization is established in downlink with the base station apparatus 200 and the user apparatus (step S1316).

On the other hand, when the RSRP value is less than the predetermined threshold (step S1314: YES), the synchronization status determining unit 1087 determines that the synchronization is not established in downlink with the base station apparatus 200 and the user apparatus (step S1318).

Thereafter, the signal generator 1090 stops uplink signal transmission (step S1320). The uplink signal includes, for example, an uplink shared channel, a sounding RS, an uplink control channel, for example, acknowledgement information on a downlink shared channel, downlink quality information (CQI), etc. Here, as described above, even when it is decided that the uplink signal transmission be stopped, the signal generator 1090 may operate such that a random access channel only may be transmitted. Moreover, in step S1320, in addition to the above process, the synchronization status determining unit 1087 reports the downlink synchronization status of the user apparatus 100ₙ to the call processor 110 (upper layer). In this case, for example, when, after receiving, from the synchronization status determining unit 1087, information that the downlink synchronization status is not established, the status (a status that the downlink synchronization status is not established) continues, the call processor 110 may determine that it performs a process of reestablishing a connection between the base station apparatus 200 and the user apparatus 100ₙ, and perform the process of reestablishing the connection.

In the present embodiment, a case is described of calculating the RSRP and determining the synchronization status based on the RSRP in the RSRP calculating unit 1092. However, it may be arranged to determine an RSRP/RSSI (receive signal strength indicator) and determine the synchronization status using the RSRP/RSSI. The RSSI is a digitized strength of all received signal radio waves including a signal transmitted from the base station apparatus 200, a signal from other base station apparatuses, contribution of thermal noise, etc. In this case, in the RSRP calculating unit 1092, a downlink reference signal input from the downlink reference signal receiver 1085, all receive signals input to the DeMUX, and the channel estimation value are used to calculate the downlink RSRP and RSSI, so that the RSRP/RSSI is determined. The RSRP/RSSI may be called a RSRQ (reference signal received quality).

Next, a radio communications system to which base station apparatuses and user apparatuses according to another embodiment of the present invention are applied is described.

A configuration of the radio communications system according to the present embodiment is similar to the configuration described with reference to FIG. 1. A configuration of the base station apparatus according to the present embodiments is similar to the configuration described with reference to FIGS. 3 and 4. In this case, the thresholds TH1, TH2, TH3, and TH5, and the time interval T4 used at the time of determining the downlink synchronization status as described above, are defined as a threshold or a time interval used at the time of determining the downlink synchronization status based on the below-described RSRP value. Below, the above values are expressed as thresholds TH1", TH2", TH3", and TH5", and a time interval T4". The base station apparatus 200 reports, to the user apparatus 100ₙ, the thresholds TH1", TH2", TH3", and TH5" and time interval T4" using the broadcast channel or the RRC message.

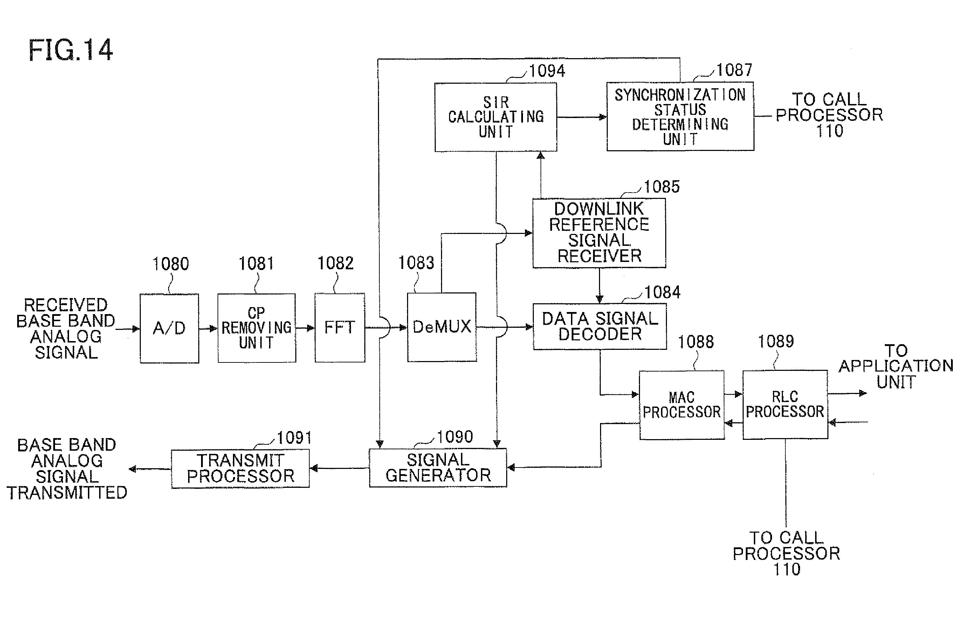

As shown in FIG. 14, the user apparatus 100ₙ according to the present embodiment is different from a user apparatus described with reference to FIG. 6 in that an SIR calculating unit 1094 is provided instead of a CQI calculating unit 1086. The SIR calculating unit 1094 calculates an SIR of the downlink reference signal. Also for the SIR, in a manner similar to the CQI, a measurement interval in the frequency direction may be the overall system bandwidth, 6 resource blocks located in the center of the systems bandwidth, or a resource block group in which several resource blocks are grouped.

Then the SIR calculating unit 1094 inputs the calculated SIR value to the synchronization status determining unit 1087 and the signal generator 1090.

The synchronization status determining unit 1087 receives the SIR value from the SIR calculating unit 1094. Then, based on the SIR value, the downlink synchronization status is determined. For example, the synchronization status determining unit 1087 determines that the downlink synchronization is not established when the SIR value is zero, and the downlink synchronization is established when the SIR value is not zero.

The status such that the SIR value is 0 can be assumed as an out-of-range status.

Alternatively, even for a case other than the SIR value being zero, the synchronization status determining unit 1087 may be arranged two determine the synchronization to be not established when it can be assumed that the synchronization is not established. Such an arrangement as described above makes it possible to determine the synchronization status even when the SIR value is not 0. For example, when the SIR value is less than the predetermined threshold TH1", it may be determined that the synchronization is not established, whereas when the SIR value is no less than the TH1", it may be determined that the synchronization is established. For example, as a value of the TH1", a value such as -6 dB may be set. The above-listed value of -6 dB is exemplary, so that any value other than what is listed in the above may be set.

Alternatively, the synchronization status determining unit 1087 may use hysteresis when determining the synchronization status using the SIR value. For example, in a status in which the synchronization is determined to be established, when the SIR value is less than the predetermined threshold TH2", it may be determined that the synchronization is not established, while in a status in which the synchronization is not established, when the SIR value is no less than a predetermined threshold TH3", it may be determined that the synchronization is established. The difference between the TH22" and the TH3"_{,} corresponds to hysteresis. For example, -7 dB may be set as the TH2" value and a value of -4 dB may be set as the TH3" value. The above-listed value of -7 dB or -4 dB is exemplary, so that any value other than what is listed in the above may be set.

Here, in a status in which the downlink synchronization is determined to be established, when a status of the SIR value being less than a predetermined threshold TH1" (or TH2") continues for no less than a predetermined number (T4") of time intervals, the synchronization status determining unit 1087 may determine may determine that the downlink synchronization between the mobile station 100ₙ and the base station apparatus 200 is not established. Alternatively, in a status in which the downlink synchronization is determined to be established, when a ratio of time period in which a SIR value is less than a predetermined threshold TH1" (or TH2") to a predetermined time interval T4" is no less than a predetermined threshold TH5", a downlink synchronization between the mobile station 100ₙ and the base station apparatus 200 may be determined to be not established. For example, as a T4" value, a value such as 200 ms may be set. Alternatively, as the TH5" value, a value such as 50% may be set, for example. The above-listed value of 200 ms or 50% is exemplary, so that any value other than what is listed in the above may be set.

On the other hand, in a status in which the downlink synchronization is determined to be not established, when at least one event of the SIR value being no less than the predetermined threshold TH1" (or TH3") occurs, the synchronization status determining unit 1087 may determine that the downlink synchronization between the mobile station 100ₙ and the base station apparatus 200 is established. Alternatively, in a status in which the downlink synchronization is determined to be not established, when a status of the SIR value being no less than the predetermined threshold TH1" (or TH3") continues for no less than a predetermined number (T4") of time intervals, the synchronization status determining unit 1087 may determine that the downlink synchronization between the mobile station 100ₙ and the base station apparatus is established. Alternatively, in a status in which the downlink synchronization is determined to be not established, when a ratio of time period in which the SIR value is not less than a predetermined threshold TH1" (or TH3") to a predetermined time interval T4" is no less than a predetermined threshold TH25", it may determine the downlink synchronization between the mobile station 100ₙ and the base station apparatus 200 to be established. Also for the threshold TH5", a hysteresis may be taken into account as described below in TH2" and TH3". For example, as the T4" value, a value such as 200 ms may be set. Alternatively, as the TH5" value, a value such as 50% may be set, for example. The above-listed value of 200 ms or 50% is exemplary, so that any value other than what is listed in the above may be set.

At the sync status determining unit 1087, the thresholds such as TH1", TH2", TH3", and TH5", and the time interval T4" may be reported from the base station apparatus 200 using the downlink broadcast channel and the RRC message. For example, when the thresholds such as TH1", TH22", TH3", and TH5", and the time interval T4" are reported using the broadcast channel, the base band signal processor 108 performs a receive process on the thresholds such as TH1", TH2", TH3", and TH5", and the time interval T4", and reports the results to the call processor 110. Then, the call processor 110 reports the thresholds TH1", TH2", TH3", and TH5", and the time interval T4" to the synchronization status determining unit 1087.

Alternatively, when the thresholds such as TH1", TH2", TH3", and TH5", and the time interval T4" are reported using the RRC message, the base band signal processor 108 performs a receive process on the thresholds such as TH1", TH2", TH3", and TH5" and the time interval T4", and reports the results to the call processor 110. Then, the call processor 110 reports the thresholds TH1", TH2", TH3", and TH5", and the time interval T4" to the synchronization status determining unit 1087.

Reporting the thresholds TH1", TH2", TH3", and TH5", and the time interval T4" using the broadcast channel makes it possible to determine the downlink synchronization status using common decision criteria within the cell 50. On the other hand, when the thresholds TH1", TH2", TH3", and TH5" and the time interval T4" are reported using the RRC message, the RRC message is separately reported to each user apparatus, so that the downlink synchronization status can be determined using decision criteria suited to each user apparatus.

The synchronization status determining unit 1087 reports the downlink synchronization status of the user apparatus 100ₙ to the call controller 110 (upper layer) and the signal generator 1090. When, after receiving, from the synchronization status determining unit 1087, information that a downlink synchronization status is not established, for example, the status (a status that the downlink synchronization status is not established) continues, it may determine that a process is performed of reestablishing a connection between a base station apparatus 200 and a user apparatus 100ₙ, and the process is performed of reestablishing the connection.

Moreover, even in this case, in a manner similar to the case in which the downlink synchronization is determined based on the CQI value, the signal generator 1090 stops uplink transmission when it receives, from the synchronization status determining unit 1087, the results of determining that the synchronization is not established for the downlink synchronization status of the user apparatus 100ₙ.

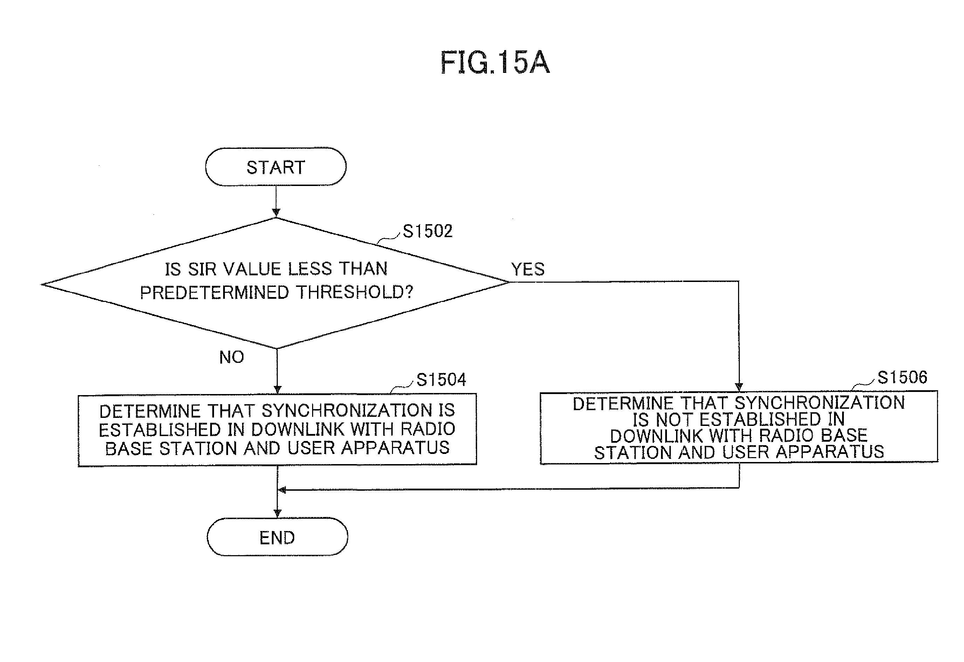

Next, a method of detecting downlink out-of-sync as a transmission control method in the user apparatus 100ₙ according to the present embodiment is described with reference to FIG. 15A.

The base station apparatus 200 transmits a downlink signal. For example, the base station apparatus 200 transmits a downlink shared channel (DL-SCH), DL scheduling information, a UL scheduling grant, acknowledgement information on UL-SCH, a broadcast channel (BCH), a paging channel (PCH), a downlink reference signal, etc.

The synchronization status determining unit 1087 performs a determining process on the downlink synchronization status based on downlink quality information generated using the downlink reference signal (step S1502). For example, the SIR calculating unit 1094 calculates an SIR of the downlink reference signal. Based on a value of the SIR, the synchronization status determining unit 1087 determines the downlink synchronization status. For example, when the SIR value is less than a predetermined threshold, the synchronization status determining unit 1087 determines that the synchronization is not established, and when the SIR value is no less than the threshold, it determines that the synchronization is established.

When the SIR value is not less than the predetermined threshold (step S1502: NO), the synchronization status determining unit 1087 determines that the synchronization is established in downlink with the base station apparatus 200 and the user apparatus (step S1504).

On the other hand, when the SIR value is less than the predetermined threshold (step S1502: YES), the synchronization status determining unit 1087 determines that the synchronization is not established in downlink with the base station apparatus 200 and the user apparatus (step S1506).

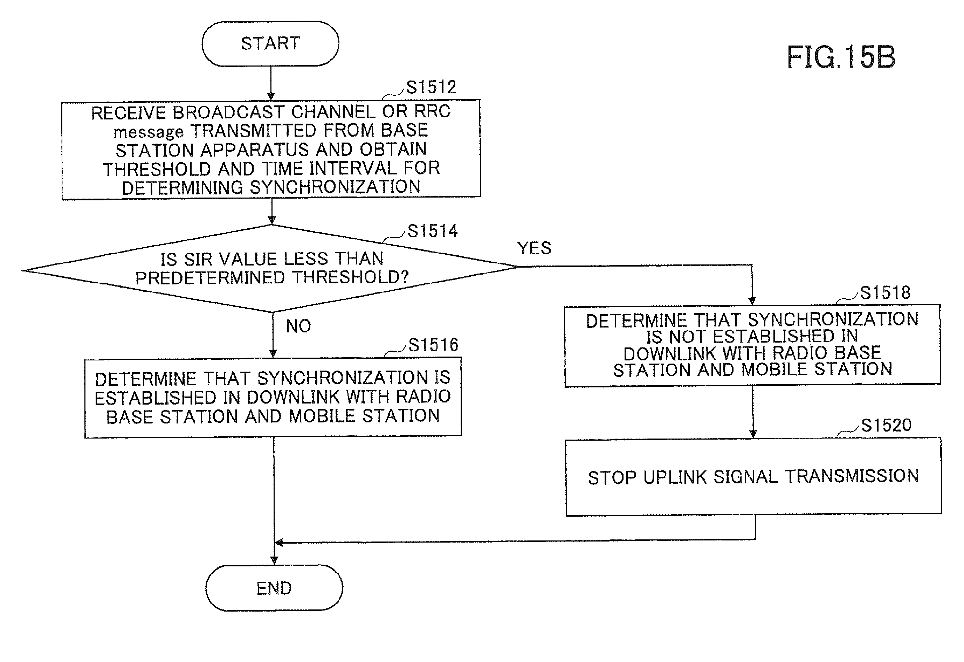

Next, a method of detecting downlink out-of-sync as a further transmission control method in the user apparatus 100ₙ according to the present embodiment is described with reference to FIG. 15B.

The synchronization status determining unit 1087 in the user apparatus 100ₙ receives a broadcast channel or an RRC message transmitted from the base station apparatus 200, and obtains a threshold and a time interval for determining synchronization (step S1512). For example, as described in the above, the base station apparatus 200 reports, using a broadcast channel or an RRC message to the user apparatus, a time interval T4" and thresholds TH1", TH2", TH3", and TH5" used at the time the user apparatus 100ₙ determines the downlink synchronization status based on the SIR value. The broadcast channel and the RRC message are transmitted to the user apparatus 100ₙ.

Next, the synchronization status determining unit 1087 performs a determining process on the downlink synchronization status based on the SIR value generated using the downlink reference signal (step S1514) . In other words, the SIR calculating unit 1092 calculates the SIR of the downlink reference signal, and the synchronization status determining unit 1087 determines the downlink synchronization status based on the SIR value. For example, when the SIR value is less than the predetermined threshold, the synchronization status determining unit 1087 determines that the synchronization is not established, and when the SIR value is no less than the threshold, it determines that the synchronization is established. Here, the threshold mean the threshold TH1", TH2", TH3", TH5" or the time interval T4" used at the time of determining the downlink synchronization status.

When the SIR value is not less than the predetermined threshold (step S1514: NO), the synchronization status determining unit 1087 determines that the synchronization is established in downlink with the base station apparatus 200 and the user apparatus (step S1516).

On the other hand, when the SIR value is less than the predetermined threshold (step S1514: YES), the synchronization status determining unit 1087 determines that the synchronization is not established in downlink with the base station apparatus 200 and the user apparatus (step S1518).

Thereafter, the signal generator 1090 stops uplink signal transmission (step S1520). The uplink signal includes, for example, an uplink shared channel, a sounding RS, an uplink control channel, for example, downlink quality information (CQI), a downlink shared channel acknowledgement information, etc. Here, as described above, even when it is decided that the uplink signal transmission be stopped, the signal generator 1090 may operate such that a random access channel only may be transmitted. Moreover, in step S1520, in addition to the above process, the synchronization status determining unit 1087 reports the downlink synchronization status of the user apparatus 100ₙ to the call processor 110 (upper layer). In this case, for example, when, after receiving, from the synchronization status determining unit 1087, information that the downlink synchronization status is not established, the status (a status that the downlink synchronization status is not established) continues for a predetermined time interval, it may be determined that a process is performed of reestablishing a connection between the base station apparatus 200 and the user apparatus 100ₙ, and the process may be performed of reestablishing the connection.

Next, a radio communications system to which base station apparatuses and user apparatuses according to another embodiment of the present invention are applied is described.

A configuration of the radio communications system according to the present embodiment is similar to the configuration described with reference to FIG. 1. A configuration of the base station apparatus according to the present embodiment is similar to the configuration described with reference to FIGS. 3 and 4. As described below, the base station apparatus 200 may report a threshold TH7 and a time interval T6 to the user apparatus 100ₙ using the broadcast channel or the RRC message.

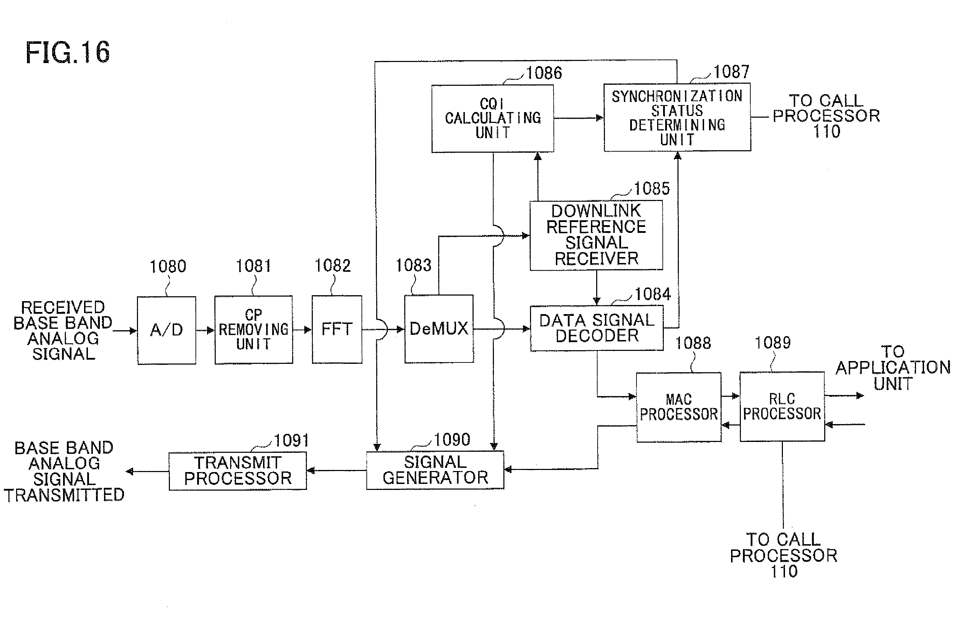

As shown in FIG. 16, the user apparatus 100ₙ according to the present embodiment is different from the user apparatus described with reference to FIG. 6 in that a connection is provided from the data signal decoder 1084 to the synchronization status determining unit 1087. The user apparatus 100ₙ according to the present embodiment determines the downlink synchronization status based on not only the CQI but also the error rate of the broadcast channel. Below, an explanation is given with respect to what are different from FIG. 6 as described above.

The data signal decoder 1084 decodes the broadcast channel signal and reports the decoded result to the synchronization status determining unit 1087. Here, the above-described broadcast channel, more specifically, means a physical broadcast channel (P-BCH), or a dynamic broadcast channel (D-BCH: dynamic broadcast channel), and DL scheduling information for the D-BCH. In other words, the data signal decoder 1084 reports, to the synchronization status determining unit 1087, decoded results of the P-BCH, the D-BCH, and the DL scheduling information for the D-BCH.

The synchronization status determining unit 1087 receives, from the data signal decoder 1084, the decoded results of the P-BCH, the D-BCH, and the DL scheduling information for the D-BCH, and determines the downlink synchronization status based on the decoded results of the P-BCH, the D-BCH, and the DL scheduling information for the D-BCH. For example, when the decoded result of all P-BCHs during a predetermined time interval (T6) is NG (the result that they cannot be decoded normally) in a status in which the downlink synchronization is determined to be established, the synchronization status determining unit 1087 may determine that the downlink synchronization between the mobile station 100ₙ and the mobile station apparatus 200 is not established. Alternatively, in a status in which the downlink synchronization is determined to be established, when a ratio of NG within the decoded result of all P-BCHs in the predetermined time interval T6 is no less than a threshold TH7, it may determine the downlink synchronization between the mobile station 100ₙ and the base station 200 to be not established.

On the other hand, in a status in which the downlink synchronization is determined to be not established, when at least one event of the P-BCH decoded result not being NG occurs, the synchronization status determining unit 1087 may determine the downlink synchronization between the mobile station 100ₙ and the base station apparatus 200 to be established. Alternatively, in a status in which the downlink synchronization is determined to be not established, when a ratio of NG within the decoded result of all P-BCHs in the predetermined time interval T6 is no less than the threshold TH7, the synchronization status determining unit 1087 may determine the downlink synchronization between the mobile station 100ₙ and the base station 200 to be established. Also for the threshold TH7, a hysteresis may be taken into account as for the TH2 or TH3.

Instead of the decoded result of the P-BCH as described above, the decoded result of the D-BCH, and the downlink scheduling information for the D-BCH may be used to perform a similar determination. Alternatively, a multiple number of decoded results of the P-BCH, decoded results of the D-BCH, and the decoded results of the downlink scheduling information for the D-BCH may be used to perform a similar determination.

The synchronization status determining unit 1087 determines the downlink synchronization status based on determining using the decoded result of the broadcast channel and the CQI based determination. For example, when each of the determined results is that "the synchronization status is established", it may be determined that the synchronization status is established, and otherwise, it may determine that the synchronization status is not established. Alternatively, when each of the determined results is that "the synchronization status is not established", it may determine that the synchronization status is not established, and otherwise, it may determine that the synchronization status is established.

Moreover, the above-described T6 and TH7 may be reported from the base station apparatus 200 using the broadcast channel or the RRC channel.

Moreover, even at the time of starting communications, the downlink synchronization status may be determined in a similar manner.

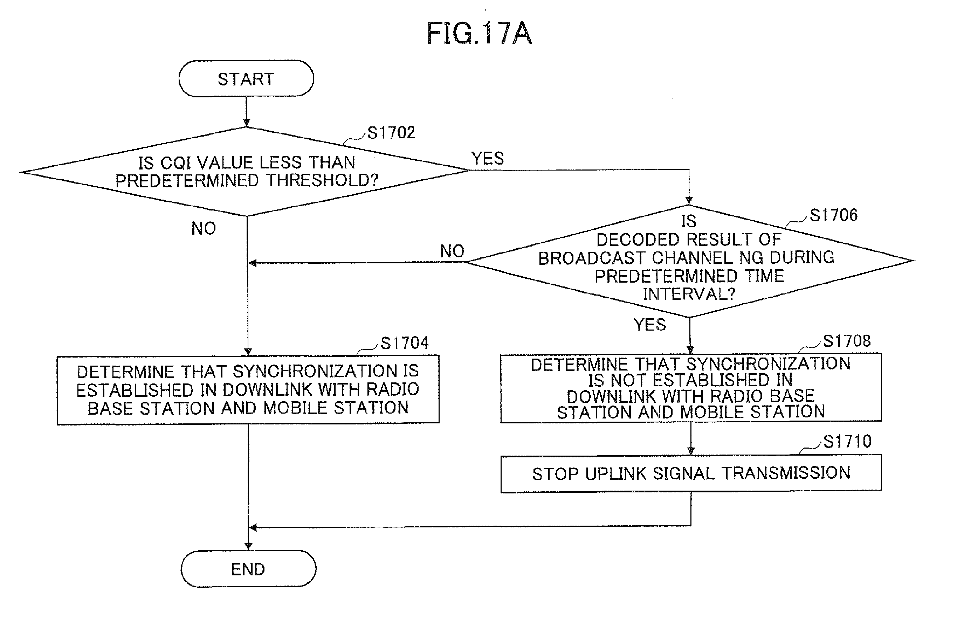

Next, a method of detecting downlink out-of-sync as a transmission control method in the user apparatus 100ₙ according to the present embodiment is described with reference to FIG. 17A.

The base station, apparatus 200 transmits a downlink signal. For example, the base station apparatus 200 transmits a downlink shared channel (DL-SCH), DL scheduling information, a UL scheduling grant, acknowledgement information on UL-SCH, a broadcast channel (BCH), a paging channel (PCH), etc.

The synchronization status determining unit 1087 performs a determining process on the downlink synchronization status based on the downlink quality information generated using the downlink reference signal (step S1702). For example, the CQI calculating unit 1086 may calculate an SIR of the downlink reference signal, and calculate a CQI using the SIR, and a reference table as described with reference to Table 1. Based on the CQI value, the synchronization status determining unit 1087 determines the downlink synchronization status. For example, when the CQI value is less than a predetermined threshold, the synchronization status determining unit 1087 determines that the synchronization is not established, and when the CQI value is no less than the threshold, it determines that the synchronization is established.

When the CQI value is not less than a predetermined threshold (step S1702: NO), the synchronization status determining unit 1087 determines that the synchronization is established in downlink with the base station apparatus 200 and the user apparatus (step S1704).

On the other hand, when the CQI value is less than the predetermined threshold (step S1702: YES), the synchronization status determining unit 1087 determines the downlink synchronization status based on the decoded result of the P-BCH, D-BCH, and the DL scheduling information for the D-BCH, which decoded result is input from the data signal decoder 1084 (step S1706). For example, when the decoded result of all P-BCHs during a predetermined time interval (T6) is NG (the result that they cannot be decoded normally) in a status such that the downlink, synchronization is determined to be established, the synchronization status determining unit 1087 may determine that the downlink, synchronization between the mobile station 100ₙ and the mobile station apparatus 200 is not established.

When it is determined that the decoded result of the broadcast channel is NG during a predetermined time interval (step S1706: YES), the synchronization status determining unit 1087 determines that the downlink synchronization is not established (step S1708). Thereafter, the signal generator 1090 stops uplink signal transmission (step S1710). The uplink signal includes, for example, an uplink shared channel, a sounding RS, an uplink control channel, for example, acknowledgement information on downlink shared channel, downlink quality information (CQI), etc. Here, as described above, even when it is decided that the uplink signal transmission be stopped, the signal generator 1090 may operate such that a random access channel only may be transmitted.

Moreover, in step S1708, in addition to the above process, the synchronization status determining unit 1087 may report the downlink synchronization status of the user apparatus 100ₙ to the call processor 110 (upper layer). In this case, for example, when, after receiving, from the synchronization status determining unit 1087, information that a downlink synchronization status is not established, the status (a status that the downlink synchronization status is not established) continues, the call processor 110 may determine that it performs a process of reestablishing a connection between the base station apparatus 200 and the user apparatus 100ₙ, and perform the process of reestablishing the connection.

On other hand, when the decoded result of the broadcast channel is not determined to be NG during the predetermined time interval (step S1706: NO), a process similar to step S1704 is performed.

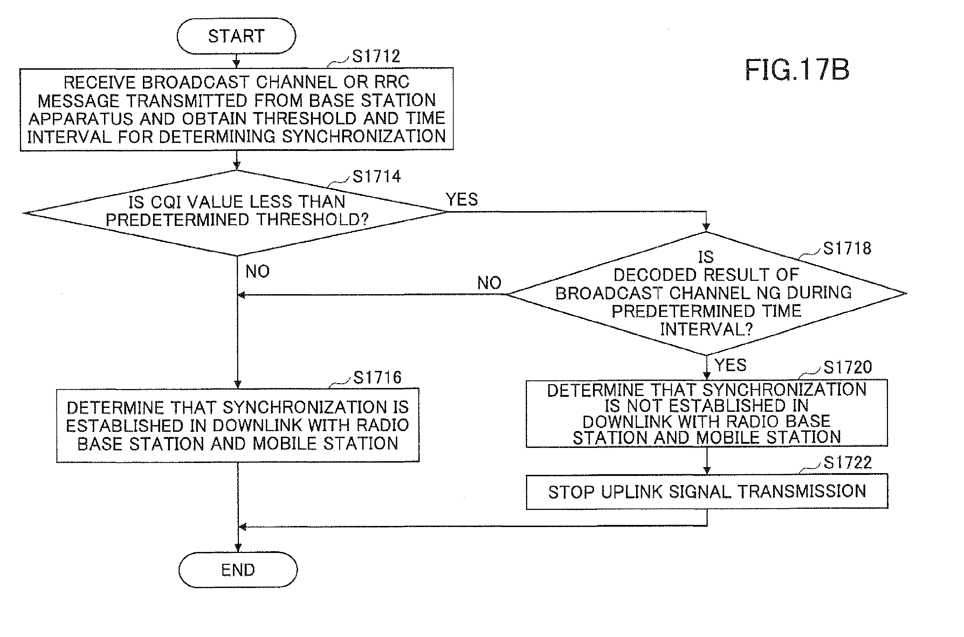

Next, a method of detecting downlink out-of-sync as another transmission control method in the user apparatus 100ₙ according to the present embodiment is described with reference to FIG. 17B.

Steps S1714-S1722 in the method of detecting downlink out-of-sync as another transmission control method according to the present embodiment are similar to steps S1702-S1706 in the method of detecting downlink out-of-sync that is described with reference to FIG. 17A.

A broadcast channel or an RRC message transmitted from the base station apparatus 200 is received, and a threshold and a time interval for determining synchronization are obtained (step S1712). For example, as described in the above, the base station apparatus 200 reports, using the broadcast channel or the RLC message to the user apparatus, a time interval T4 and thresholds TH1, TH2, TH3, TH5, and TH7 used at the time the user apparatus 100ₙ determines the downlink synchronization status based on the CQI value. The broadcast channel and the RRC message are transmitted to the user apparatus 100ₙ.

In the above-described embodiments, exemplary systems to which Evolved UTRA and UTRAN (also called Long Term Evolution or Super 3G) is applied have been described. However, the mobile apparatus, and the communications control method according to the present invention are applicable in all systems communicating using a common channel in downlink.

Moreover, in the above-described explanation, an expression "downlink synchronization is established/not established" is used, which expression is equivalent to expressions "downlink is out of synchronization/not out of synchronization", and "downlink out of synchronization/downlink in synchronization".

For convenience of explanation, specific numerical value examples are used to facilitate understanding of the present invention. However, unless otherwise specified, such numerical values are merely exemplary, so that any appropriate value may be used.

As described above, while the present invention is described with reference to specific embodiments, the respective embodiments are merely examples, so that a skilled person will understand variation modifications, alternatives, replacements, etc. For convenience of explanation, while the apparatuses according to the embodiments of the present invention are explained using functional block diagrams, such apparatuses as described above may be implemented in hardware, software, or a combination thereof. The present invention is not limited to the above embodiments, so that variations, modifications, alternatives, and replacements are included in the present invention without departing from the spirit of the present invention.

The present application claims priority based on Japanese Patent Application No. 2007-211588 filed on August 14, 2007 with the Japanese Patent Office, the entire contents of which are hereby incorporated herein by reference.

## Claims

1. A user apparatus in communication with a base station apparatus, comprising:
a determining unit which determines a downlink synchronization status based on downlink quality information measured based on a downlink signal transmitted from the base station apparatus.

2. The user apparatus as claimed in claim 1, wherein the determining unit determines that downlink synchronization is not established when the downlink quality information is out of range, and determines that the downlink synchronization is established when the downlink quality information is not out of range.

3. The user apparatus as claimed in claim 2, wherein the determining unit determines that the downlink synchronization is not established when a status that the downlink quality information is out of range continues for a predetermined time period, and determines that the downlink synchronization is established when a status that the downlink quality information is not out of range continues for a predetermined time period.

4. The user apparatus as claimed in claim 1, wherein the determining unit determines that downlink synchronization is not established when a radio quality of a reference signal transmitted downlink by the base station apparatus is less than a predetermined threshold, and determines that the downlink synchronization is established when the radio quality of the reference signal is not less than the predetermined threshold.

5. The user apparatus as claimed in claim 4, wherein the determining unit determines that the downlink synchronization is not established when a status that the radio quality of the reference signal is less than the predetermined threshold continues for a certain time period, and that the downlink synchronization is established when a status that the radio quality of the reference signal is not less than the predetermined threshold continues for a predetermined time period.

6. The user apparatus as claimed in claim 4, wherein the radio quality is a receive power and/or an SIR and/or a channel quality indicator (CQI).

7. The user apparatus as claimed in claim 1, wherein the determining unit further includes an uplink transmission stopping unit which stops uplink signal transmission when it is determined that the downlink synchronization is not established.

8. The user apparatus as claimed in claim 1, wherein the determining unit further includes a reporting unit which, when it is determined that the downlink synchronization is not established, reports, to an upper layer, information that the downlink synchronization is not established.

9. The user apparatus as claimed in claim 7, wherein the uplink signal is at least one of: a sounding reference signal; an uplink shared channel, an uplink control channel; acknowledgement information on downlink shared channel; and downlink quality information.

10. The user apparatus as claimed in claim 7, wherein the uplink transmission stopping unit stops transmission of all uplink signals other than a random access channel.

11. The user apparatus as claimed in claim 4, further comprising:
a receive unit which receives a threshold for determining the downlink synchronization status, the threshold to be transmitted from the base station apparatus; and
a determining unit which determines whether a downlink synchronization is established based on a threshold transmitted from the base station apparatus.

12. The user apparatus as claimed in claim 11, wherein the receive unit receives a threshold mapped to a radio resource control (RRC) message or broadcast information.

13. The user apparatus as claimed in claim 5, further comprising a receiving unit which receives a time interval for determining the downlink synchronization status, the time interval to be transmitted from the base station apparatus, wherein the determining unit determines that the downlink synchronization is not established when a status that the reference signal radio quality is less than the predetermined threshold continues for a certain time period, and that the downlink synchronization is established when a status that the reference signal radio quality is not less than the predetermined threshold continues for a predetermined time period.

14. The user apparatus as claimed in claim 1, wherein the determining unit determines the downlink synchronization status based on downlink quality information measured based on the downlink signal transmitted from the base station apparatus in one of:
an idle status;
an RRC connected status;
the RRC connected status and a non-DRX status;
the RRC connected status and a DRX status;
the RRC connected status and a status in which an uplink dedicated resource is released; and
a status in which the uplink dedicated resource is not released.

15. A base station apparatus in a mobile communications system, the mobile communications system including a user apparatus and the base station apparatus, the base station apparatus in communication with the user apparatus, the base station apparatus further comprising:
a reporting unit which reports a threshold for determining a downlink synchronization status.

16. The base station apparatus as claimed in claim 15, wherein the reporting unit reports the threshold using a radio resource control (RRC) message or broadcast information.

17. A base station apparatus in a mobile communications system, the mobile communications system including a user apparatus and the base station apparatus, the base station apparatus in communication with the user apparatus, the base station apparatus further comprising:
a reporting unit which reports a time interval for determining a downlink synchronization status.

18. A method of controlling transmission in a user apparatus in communication with a base station apparatus, comprising:
a first step of determining a downlink synchronization status based on downlink quality information measured based on a downlink signal transmitted by the base station apparatus; and
a second step of stopping transmission of an uplink signal when the downlink synchronization status is a status in which a synchronization is not established.
